# EUROPEAN PATENT SPECIFICATION

(11) **EP 0 919 025 B1**
(45) Date of publication and mention of the grant of the patent: **26.09.2001**
(21) Application number: 96926083.5
(22) Date of filing: 16.07.1996
(51) Int. Cl.: G06F 9/30

(54) **A PARALLEL AND SCALABLE INSTRUCTION SCANNING UNIT**
PARALLELE UND SKALIERBARE BEFEHLSABTASTEINHEIT
UNITE D'EXPLORATION D'INSTRUCTIONS PARALLELE ET MODULABLE

(43) Date of publication of application: 02.06.1999
(73) Proprietor: Advanced Micro Devices, Inc., Austin, TX 78741 (US); Rammohan, Narayan, Austin, TX 78731 (US)
(72) Inventor: NARAYAN, Rammohan, 2015, Austin, Texas (US)
(74) Representative: Brookes Batchellor
(86) International application number: US9611760
(87) International publication number: WO9802799

(56) References cited:
- EP-A- 0 651 322
- EP-A- 0 685 788
- WO-A-96/10783
- GB-A- 2 263 987

## Description

### BACKGROUND OF THE INVENTION

### 1. Field of the Invention

This invention relates to the field of instruction scanning mechanisms within superscalar microprocessors and, more particularly, to parallel and scalable instruction scanning mechanisms within superscalar microprocessors.

### 2. Description of the Relevant Art

Superscalar microprocessors are capable of attaining performance characteristics which surpass those of conventional scalar processors by allowing the concurrent execution of multiple instructions. Due to the widespread acceptance of the x86 family of microprocessors, efforts have been undertaken by microprocessor manufacturers to develop superscalar microprocessors which execute x86 instructions. Such superscalar microprocessors achieve relatively high performance characteristics while advantageously maintaining backwards compatibility with the vast amount of existing software developed for previous microprocessor generations such as the 8086, 80286, 80386. and 80486.

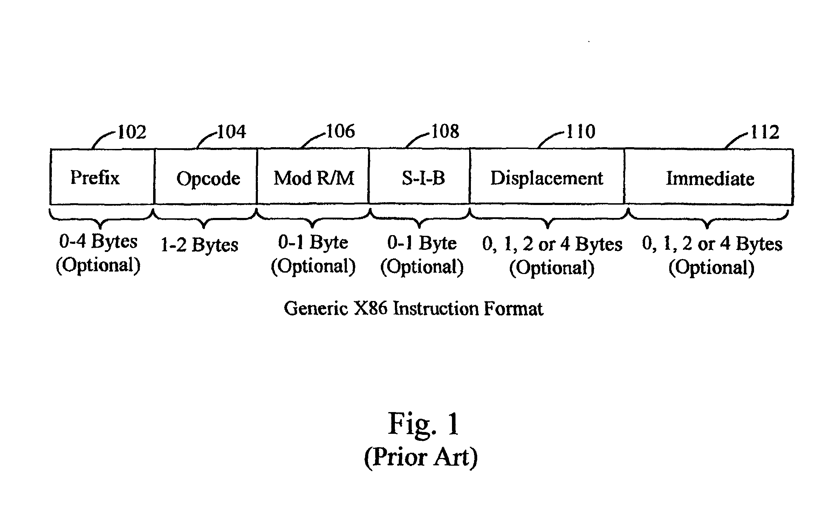

The x86 instruction set is relatively complex and is characterized by a plurality of variable byte length instructions. A generic format illustrative of the x86 instruction set is shown in Figure 1. As illustrated in the figure, an x86 instruction consists of from one to five optional prefix bytes 102, followed by an operation code (opcode) field 104, an optional addressing mode (Mod R/M) byte 106, an optional scale-index-base (SIB) byte 108, an optional displacement field 110, and an optional immediate data field 112.

The opcode field 104 defines the basic operation for a particular instruction. The default operation of a particular opcode may be modified by one or more prefix bytes. For example, a prefix byte may be used to change the address or operand size for an instruction, to override the default segment used in memory addressing, or to instruct the processor to repeat a string operation a number of times. The opcode field 104 follows the prefix bytes 102, if any, and may be one or two bytes in length. The addressing mode (Mod R/M) byte 106 specifies the registers used as well as memory addressing modes. The scale-index-base (SIB) byte 108 is used only in 32-bit base-relative addressing using scale and index factors, A base field of the SIB byte specifies which register contains the base value for the address calculation, and an index field specifies which register contains the index value. A scale field specifies the power of two by which the index value will be multiplied before being added, along with any displacement, to the base value. The next instruction field is the optional displacement field 110, which may be from one to four bytes in length. The displacement field 110 contains a constant used in address calculations. The optional immediate field 112, which may also be from one to four bytes in length, contains a constant used as an instruction operand. The shortest x86 instructions are only one byte long, and comprise a single opcode byte. The 80286 sets a maximum length for an instruction at 10 bytes, while the 80386 and 80486 both allow instruction lengths of up to 15 bytes.

The complexity of the x86 instruction set poses difficulties in implementing high performance x86 compatible superscalar microprocessors. One difficulty arises from the fact that instructions must be scanned and aligned with respect to the parallel-coupled instruction decoders of such processors before proper decode can be effectuated. In contrast to most RISC instruction formats, since the x86 instruction set consists of variable byte length instructions, the start bytes of successive instructions within a line are not necessarily equally spaced, and the number of instructions per line is not fixed. As a result, employment of simple, fixed-length shifting logic cannot in itself solve the problem of instruction alignment Although scanning logic has been proposed to dynamically find the boundaries of instructions during the decode pipeline stage (or stages) of the processor, such a solution typically requires that the decode pipeline stage of the processor be implemented with a relatively large number of cascaded levels of logic gates and/or the allocation of several clock cycles to perform the scanning operation.

A further solution to instruction alignment and decode within x86 compatible superscalar microprocessor is described within our copending, EP-A-0651 320 entitled "Superscalar Instruction Decoder". The solution proposed within the above-referenced patent application involves a translation of each variable length x86 instruction into one or more fixed-length RISC-like instructions. Upon translation, each fixed-length RISC-like instruction is aligned with respect to an allocated instruction decoder. While this solution has been quite successful, it too typically requires a relatively large number of cascaded levels of logic gates. This correspondingly limits the maximum overall clock frequency of the Superscalar microprocessor. An instruction scanning mechanism which detects instruction boundaries and identifies valid instructions prior to the decode stage is desired. Furthermore, an instruction scanning mechanism which may be implemented in a relatively small number of cascaded levels of logic gates is desired to facilitate high frequency operation.

EP-A-0 651 322 discloses an instruction cache for a superscalar processor where the instructions have variable length formats as in the case of the x86 microprocessor instruction set It discloses a solution in which instructions are prefetched and predecoded, and bits indicative among other things of the start and end of each instruction are encoded with the instructions in the instruction cache.

### SUMMARY OF THE INVENTION

The problems outlined above are in large part solved by an instruction scanning unit in accordance with the present invention. The instruction scanning unit processes start and end byte information associated with a plurality of contiguous instruction bytes.

The present invention provides an instruction scanning unit for scanning a block of predecode information associated with a plurality of contiguous instruction bytes wherein said block of predecode information includes start byte information indicative of bytes which start instructions and wherein said block of predecode information further includes end byte information indicative of bytes which end instructions, said instruction scanning unit comprising:
an input bus configured to convey said block of predecode information; *characterized by:*
a first subunit coupled to said input bus wherein said first subunit is configured to receive said end byte information, and wherein said first subunit is configured to generate a plurality of instruction valid values, and wherein each of said plurality of instruction valid values is indicative of a potential valid instruction starting at a particular byte within said plurality of contiguous instruction bytes and ending at a byte specified by said end byte information, and wherein said first subunit is configured to convey said plurality of instruction valid values on a plurality of instruction valid buses; and
a second subunit coupled to said input bus wherein said second subunit is configured to receive said start byte information, and wherein said second subunit is configured to generate a plurality of instruction start counts responsive to said start byte information, and wherein each of said instruction start counts is indicative of a number of instructions which start between an initial one of said plurality of contiguous instruction bytes and a particular one of said plurality of contiguous instruction bytes, wherein said particular one of said plurality of contiguous instruction bytes comprises a different one of said plurality of contiguous instruction bytes for each different one of said plurality of instruction start counts, and wherein said second subunit is configured to convey said plurality of instruction start counts on a plurality of instruction start count buses, and wherein said first subunit and said second subunit operate in parallel.

The present invention also provides method of identifying valid instructions within a plurality of instruction bytes comprising:
creating, responsive to end byte information indicative of which of said plurality of instruction bytes are end bytes, a plurality of masks, wherein each one of said plurality of masks is associated with a respective one of said plurality of instruction bytes, and wherein said each one of said plurality of masks is indicative of an instruction beginning at said respective one of said plurality of instruction bytes and ending at a subsequent one of said plurality of instruction bytes, and wherein said subsequent one of said plurality of instruction bytes is identified by said end byte information as an end byte;
generating, responsive to start byte information indicative of which of said plurality of instruction bytes are start bytes, a plurality of instruction start counts, wherein each of said plurality of instruction start counts is indicative of a number of instructions beginning prior to a respective one of said plurality of instruction bytes; and
selecting, responsive to said plurality of instruction start counts and said start byte information, one of said plurality of masks, said one of said plurality of masks corresponding to one of said plurality of instruction bytes for which a respective one of said plurality of instruction start counts equals a predetermined value and which is indicated by said start byte information to be a start byte.

In the described arrangement, therefore, the processing of start byte information and end byte information is performed independently and in parallel, and the instruction scanning unit produces a plurality of scan values. The scan values identify valid instructions within the plurality of contiguous instruction bytes. Since the start and end byte information is processed in parallel, the instruction scanning unit may be implemented in a relatively small number of cascaded logic levels. Therefore, the instruction scanning unit may be advantageously employed in high frequency superscalar microprocessors. Furthermore, performance of the superscalar microprocessor may be advantageously increased since multiple instructions are identified in a given clock cycle and therefore may be dispatched and executed concurrently.

Additionally, the instruction scanning unit is scalable. Multiple instruction scanning units may be advantageously operated in parallel to process a larger plurality of contiguous instruction bytes. A larger number of instructions may be identified per clock cycle, allowing for a higher performance superscalar microprocessor. Particularly, instructions which overflow from a prior instruction scanning unit are detected as well as instructions which overflow to a subsequent instruction scanning unit. The scalability functions may also be used by external logic to gather portions of instructions from one clock cycle for use in the subsequent clock cycle when a single instruction scanning unit is employed or when an overflow occurs from the last instruction scanning unit.

Furthermore, the instruction scanning unit detects certain error conditions. In one embodiment, start and end byte information is examined for at least two error conditions. First, the condition of having two successive start bytes without an intervening end byte is detected. This condition indicates the beginning of a new instruction prior to the previous insruction ending. Second, the condition of having an end byte without a subsequent start byte is detected. Instructions are normally placed one after another, and therefore this condition is an error. The condition indicates an instruction ending without a subsequent instruction beginning. Error information may be used by external logic to determine the proper course of action in light of the detected error.

We provide an instruction scanning unit for scanning a block of predecode information associated with a plurality of contiguous instruction bytes. The block of predecode information includes start byte information indicative of bytes which start instructions as well as end byte information indicative of bytes which end instructions. The instruction scanning unit comprises an input bus, a first subunit, and a second subunit Coupled to both the first and the second subunits is the input bus, which is configured to convey the block of predecode information. The first subunit is configured to receive the end byte information and to generate a plurality of instruction valid values. Each of the plurality of instruction valid values is indicative of a potential valid instruction starting at a particular byte within the plurality of contiguous instruction bytes and ending at a byte specified by the end byte information. The first subunit is configured to convey the plurality of instruction valid values on a plurality of instruction valid buses. The second subunit is configured to receive the start byte information and to generate a plurality of instruction start counts. Each of the instruction start counts is indicative of a number of instructions which start between a first one of the plurality of contiguous instruction bytes and a particular one of the plurality of contiguous instruction bytes. The second subunit is configured to convey the plurality of instruction start counts on a plurality of instruction start count buses, and the first second subunits operate in parallel.

### BRIEF DESCRIPTION OF THE DRAWINGS

Other objects and advantages of the invention will become apparent upon reading the following detailed description and upon reference to the accompanying drawings in which:

Figure 1 is a block diagram of a generic x86 instruction format.

Figure 2 is a block diagram of a superscalar microprocessor including an instruction cache.

Figure 3 is a block diagram of an instruction scanning unit included within the instruction cache of Figure 2.

Figure 4A is a logic diagram of portions of an IVAL generation subunit shown in Figure 3.

Figure 4B is a logic diagram of portions of a PCSTART generation subunit shown in Figure 3.

Figure 4C is a logic diagram of portions of an NSTART generation subunit shown in Figure 3.

Figure 4D is a logic diagram of portions of a Scan Bus generation subunit shown in Figure 3.

Figure 4E is a logic diagram of portions of a Special Checking subunit shown in Figure 3.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DETAILED DESCRIPTION OF THE INVENTION

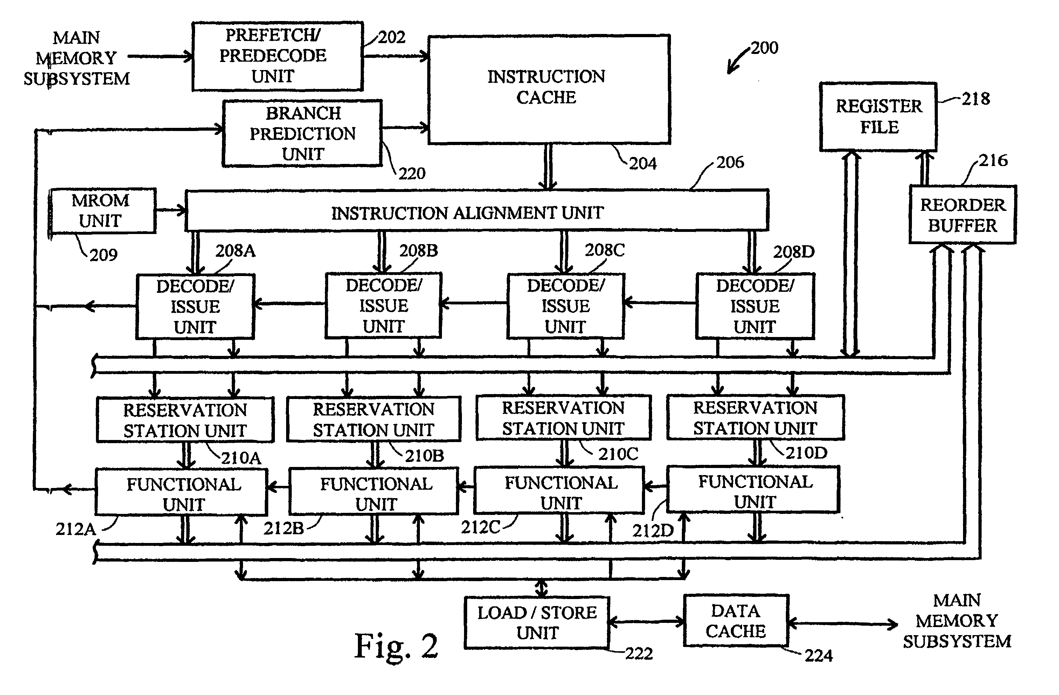

Referring next to Figure 2, a block diagram of a superscalar microprocessor 200 including an instruction cache 204 in accordance with the present invention is shown. As illustrated in the embodiment of Figure 2, superscalar microprocessor 200 includes a prefetch/predecode unit 202 and a branch prediction unit 220 coupled to an instruction cache 204. Instruction alignment unit 206 is coupled between instruction cache 204 and a plurality of decode units 208A-208D (referred to collectively as decode units 208). Each decode unit 208A-208D is coupled to respective reservation station units 210A-210D (referred to collectively as reservation stations 210), and each reservation station 210A-210D is coupled to a respective functional unit 212A-212D (referred to collectively as functional units 212). Decode units 208, reservation stations 210, and functional units 212 are further coupled to a reorder buffer 216, a register file 218 and a load/store unit 222. A data cache 224 is finally shown coupled to load/store unit 222, and an MROM unit 209 is shown coupled to instruction alignment unit 206.

Generally speaking, instruction cache 204 is a high speed cache memory provided to temporarily store instructions prior to their dispatch to decode units 208. In one embodiment, instruction cache 204 is configured to cache up to 32 kilobytes of instruction code organized in lines of 16 bytes each (where each byte consists of 8 bits). During operation, instruction code is provided to instruction cache 204 by prefetching code from a main memory (not shown) through prefetch/predecode unit 202. It is noted that instruction cache 204 could be implemented in a set-associative, a fully-associative, or a direct-mapped configuration.

Prefetch/predecode unit 202 is provided to prefetch instruction code from the main memory for storage within instruction cache 204. In one embodiment, prefetch/predecode unit 202 is configured to burst 64-bit wide code from the main memory into instruction cache 204. It is understood that a variety of specific code prefetching techniques and algorithms may be employed by prefetch/predecode unit 202.

As prefetch/predecode unit 202 fetches instructions from the main memory, it generates three predecode bits associated with each byte of instruction code: a start bit, an end bit, and a "functional" bit. The predecode bits form tags indicative of the boundaries of each instruction. The predecode tags may also convey additional information such as whether a given instruction can be decoded directly by decode units 208 or whether the instruction must be executed by invoking a microcode procedure controlled by MROM unit 209, as will be described in greater detail below. A set of start bits conveyed with a group of contiguous instruction bytes forms start byte information for that group of contiguous instruction bytes. Similarly, a set of end bits conveyed with a group of contiguous instruction bytes forms end byte information for that group of contiguous instruction bytes.

Table I indicates one encoding of the predecode tags. As indicated within the table, if a given byte is the first byte of an instruction, the start bit for that byte is set. If the byte is the last byte of an instruction, the end bit for that byte is set. If a particular instruction cannot be directly decoded by the decode units 208, the functional bit associated with the first byte of the instruction is set. On the other hand, if the instruction can be directly decoded by the decode units 208, the functional bit associated with the first byte of the instruction is cleared, The functional bit for the second byte of a particular instruction is cleared if the opcode is the first byte, and is set if the opcode is the second byte. It is noted that in situations where the opcode is the second byte, the first byte is a prefix byte. The functional bit values for instruction byte numbers 3-8 indicate whether the byte is a MODRM or an SIB byte, or whether the byte contains displacement or immediate data.

**Table 1.**

| Encoding of Start, End and Functional Bits | | | | |
|---|---|---|---|---|
| Instr. Byte Number | Start Bit Value | End Bit Value | Functional Bit Value | Meaning |
| 1 | 1 | X | 0 | Fast decode |
| 1 | 1 | X | 1 | MROM instr. |
| 2 | 0 | X | 0 | Opcode is first |
| | | | | byte |
| 2 | 0 | X | 1 | Opcode is this byte, first byte is prefix |
| 3-8 | 0 | X | 0 | Mod R/M or SIB byte |
| 3-8 | 0 | X | 1 | Displacement or immediate data; the second functional bit set in bytes 3-8 indicates immediate data |
| 1-8 | X | 0 | X | Not last byte of instruction |
| 1-8 | X | 1 | X | Last byte of instruction |

As stated previously, in one embodiment certain instructions within the x86 instruction set may be directly decoded by decode unit 208. These instructions are referred to as "fast path" instructions. The remaining instructions of the x86 instruction set are referred to as "MROM instructions". MROM instructions are executed by invoking MROM unit 209. More specifically, when an MROM instruction is encountered, MROM. unit 209 parses and serializes the instruction into a subset of defined fast path instructions to effectuate a desired operation. A listing of exemplary x86 instructions categorized as fast path instructions as well as a description of the manner of handling both fast path and MROM instructions will be provided further below.

Instruction alignment unit 206 is provided to channel variable byte length instructions from instruction cache 204 to fixed issue positions formed by decode units 208A-208D. Instruction alignment unit 206 independently and in parallel selects instructions from three groups of instruction bytes provided by instruction cache 204 and arranges these bytes into three groups of preliminary issue positions. Each group of issue positions is associated with one of the three groups of instruction bytes. The preliminary issue positions are then merged together to form the final issue positions, each of which is coupled to one of decode units 208.

Before proceeding with a detailed description of the scanning of instructions within instruction cache 204, general aspects regarding other subsystems employed within the exemplary superscalar microprocessor 200 of Figure 2 will be described. For the embodiment of Figure 2, each of the decode units 208 includes decoding circuitry for decoding the predetermined fast path instructions referred to above. In addition, each decode unit 208A-208D routes displacement and immediate data to a corresponding reservation station unit 210A-210D. Output signals from the decode units 208 include bit-encoded execution instructions for the functional units 212 as well as operand address information, immediate data and/or displacement data.

The superscalar microprocessor of Figure 2 supports out of order execution, and thus employs reorder buffer 216 to keep track of the original program sequence for register read and write operations, to implement register renaming, to allow for speculative instruction execution and branch misprediction recovery, and to facilitate precise exceptions. As will be appreciated by those of skill in the art, a temporary storage location within reorder buffer 216 is reserved upon decode of an instruction that involves the update of a register to thereby store speculative register states. Reorder buffer 216 may be implemented in a first-in-first-out configuration wherein speculative results move to the "bottom" of the buffer as they are validated and written to the register file, thus making room for new entries at the "top" of the buffer. Other specific configurations of reorder buffer 216 are also possible, as will be described further below. If a branch prediction is incorrect. the results of speculatively-executed instructions along the mispredicted path can be invalidated in the buffer before they are written to register file 218.

The bit-encoded execution instructions and immediate data provided at the outputs of decode units 208A-208D are routed directly to respective reservation station units 210A-210D. In one embodiment, each reservation station unit 210A-210D is capable of holding instruction information (i.e., bit encoded execution bits as well as operand values, operand tags and/or immediate data) for up to three pending instructions awaiting issue to the corresponding functional unit. It is noted that for the embodiment of Figure 2, each decode unit 208A-208D is associated with a dedicated reservation station unit 210A-210D, and that each reservation station unit 210A-210D is similarly associated with a dedicated functional unit 212A-212D. Accordingly, four dedicated "issue positions" are formed by decode units 208, reservation station units 210 and functional units 212. Instructions aligned and dispatched to issue position 0 through decode unit 208A are passed to reservation station unit 210A and subsequently to functional unit 212A for execution. Similarly, instructions aligned and dispatched to decode unit 208B are passed to reservation station unit 210B and into functional unit 212B, and so on.

Upon decode of a particular instruction, if a required operand is a register location, register address information is routed to reorder buffer 216 and register file 218 simultaneously. Those of skill in the art will appreciate that the x86 register file includes eight 32 bit real registers (i.e., typically referred to as EAX, EBX, ECX, EDX, EBP, ESI, EDI and ESP). Reorder buffer 216 contains temporary storage locations for results which change the contents of these registers to thereby allow out of order execution. A temporary storage location of reorder buffer 216 is reserved for each instruction which, upon decode, is determined to modify the contents of one of the real registers. Therefore, at various points during execution of a particular program, reorder buffer 216 may have one or more locations which contain the speculatively executed contents of a given register. If following decode of a given instruction it is determined that reorder buffer 216 has a previous location or locations assigned to a register used as an operand in the given instruction, the reorder buffer 216 forwards to the corresponding reservation station either: 1) the value in the most recently assigned location, or 2) a tag for the most recently assigned location if the value has not yet been produced by the functional unit that will eventually execute the previous instruction. If the reorder buffer has a location reserved for a given register, the operand value (or tag) is provided from reorder buffer 216 rather than from register file 218. If there is no location reserved for a required register in reorder buffer 216, the value is taken directly from register file 218. If the operand corresponds to a memory location, the operand value is provided to the reservation station unit through load/store unit 222.

Details regarding suitable reorder buffer implementations may be found within the publication "Superscalar Microprocessor Design" by Mike Johnson, Prentice-Hall, Englewood Cliffs, New Jersey, 1991, and within the co-pending, commonly assigned patent application entitled "High Performance Superscalar Microprocessor", Serial No. 08/146,382, filed October 29, 1993 by Witt, et al. These documents are incorporated herein by reference in their entirety.

Reservation station units 210A-210D are provided to temporarily store instruction information to be speculatively executed by the corresponding functional units 212A-212D. As stated previously, each reservation station unit 210A-210D may store instruction information for up to three pending instructions. Each of the four reservation stations 210A-210D contain locations to store bit-encoded execution instructions to be speculatively executed by the corresponding functional unit and the values of operands. If a particular operand is not available, a tag for that operand is provided from reorder buffer 216 and is stored within the corresponding reservation station until the result has been generated (i.e., by completion of the execution of a previous instruction). It is noted that when an instruction is executed by one of the functional units 212A-212D, the result of that instruction is passed directly to any reservation station units 210A-210D that are waiting for that result at the same time the result is passed to update reorder buffer 216 (this technique is commonly referred to as "result forwarding"). Instructions are issued to functional units for execution after the values of any required operand(s) are made available. That is, if an operand associated with a pending instruction within one of the reservation station units 210A-210D has been tagged with a location of a previous result value within reorder buffer 216 which corresponds to an instruction which modifies the required operand, the instruction is not issued to the corresponding functional unit 212 until the operand result for the previous instruction has been obtained. Accordingly, the order in which instructions are executed may not be the same as the order of the original program instruction sequence. Reorder buffer 216 ensures that data coherency is maintained in situations where read-after-write dependencies occur.

In one embodiment, each of the functional units 212 is configured to perform integer arithmetic operations of addition and subtraction, as well as shifts, rotates, logical operations, and branch operations. It is noted that a floating point unit (not shown) may also be employed to accommodate floating point operations.

Each of the functional units 212 also provides information regarding the execution of conditional branch instructions to the branch prediction unit 220. If a branch prediction was incorrect, branch prediction unit 220 flushes instructions subsequent to the mispredicted branch that have entered the instruction processing pipeline, and causes prefetch/predecode unit 202 to fetch the required instructions from instruction cache 204 or main memory. It is noted that in such situations. results of instructions in the original program sequence which occur after the mispredicted branch instruction are discarded, including those which were speculatively executed and temporarily stored in load/store unit 222 and reorder buffer 216. Exemplary configurations of suitable branch prediction mechanisms are well known.

Results produced by functional units 212 are sent to the reorder buffer 216 if a register value is being updated, and to the load/store unit 222 if the contents of a memory location is changed. If the result is to be stored in a register, the reorder buffer 216 stores the result in the location reserved for the value of the register when the instruction was decoded. As stated previously, results are also broadcast to reservation station units 210A-210D where pending instructions may be waiting for the results of previous instruction executions to obtain the required operand values.

Generally speaking, load/store unit 222 provides an interface between functional units 212A-212D and data cache 224. In one embodiment, load/store unit 222 is configured with a load/store buffer with eight storage locations for data and address information for pending loads or stores. Decode units 208 arbitrate for access to the load/store unit 222. When the buffer is full, a decode unit must wait until the load/store unit 222 has room for the pending load or store request information The load/store unit 222 also performs dependency checking for load instructions against pending store instructions to ensure that data coherency is maintained.

Data cache 224 is a high speed cache memory provided to temporarily store data being transferred between load/store unit 222 and the main memory subsystem. In one embodiment, data cache 224 has a capacity of storing up to eight kilobytes of data. It is understood that data cache 224 may be implemented in a variety of specific memory configurations, including a set associative configuration.

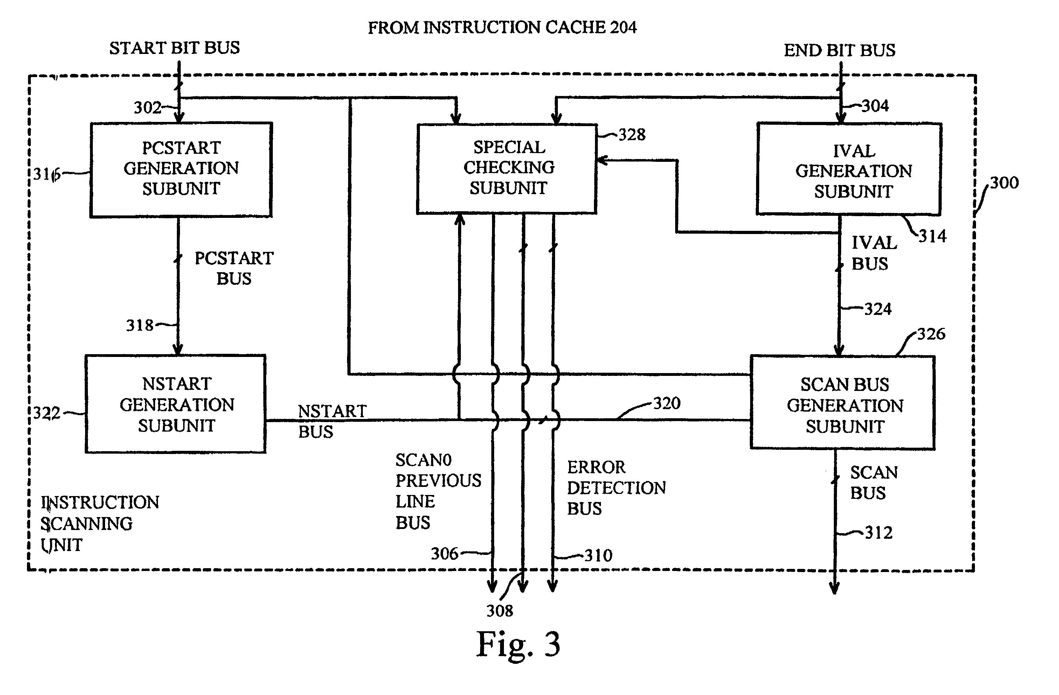

Turning now to Figure 3, an embodiment of an instruction scanning unit 300 (which is a part of instruction cache 204) is shown. Instruction scanning unit 300 receives a start bit bus 302 and an end bit bus 304 from instruction cache 204, and produces a SCAN0 previous line bus 306, a scan overflow bus 308, an error detection bus 310, and a scan bus 312. SCAN0 previous line bus 306, scan overflow bus 308, error detection bus 310, and scan bus 312 are coupled to instruction alignment unit 206. Instruction scanning unit 300 is configured with several subunits which perform various tasks. An IVAL generation subunit 314 is coupled to end bit bus 304 and to an IVAL bus 324. A PCSTART generation subunit 316 is included, coupled to start bit bus 302 and a PCSTART bus 318. Also coupled to PCSTART bus 318 and to an NSTART bus 320 is an NSTART generation subunit 322. NSTART bus 320 is further coupled to a scan bus generation subunit 326 and to a special checking subunit 328. Further coupled to scan bus generation subunit 326 is start bit bus 302 and IVAL bus 324. Coupled to special checking subunit 328 are start bit bus 302, end bit bus 304. SCAN0 previous line bus 306, scan overflow bus 308, error detection bus 310, and IVAL bus 324.

Generally speaking, instruction scanning unit 300 is configured to scan start byte information and end byte information associated with a plurality of contiguous instruction bytes. The start byte information is conveyed on start bit bus 302 and the end byte information is conveyed on end bit bus 304. Start bit bus 302 and end bit bus 304 together form an input bus to instruction scanning unit 300. instruction scanning unit 300 produces a set of scan values on scan bus 312 which are indicative of the boundaries of instructions within the plurality of contiguous instruction bytes. In one embodiment, start and end byte information is conveyed for eight contiguous instruction bytes. Instruction scanning unit 300 scans the start byte information independently and in parallel with the end byte information in PCSTART generation subunit 316, NSTART generation subunit 322, and IVAL generation subunit 314. The information so generated is combined in scan bus generation subunit 326, producing a set of masks on scan bus 312. A mask is a field of bits, each bit being associated with one instruction byte within the plurality of contiguous instruction bytes being scanned. If a particular bit of a mask is set, the associated byte is a portion of the instruction identified by that mask. If a particular bit of a mask is clear, the associated byte is not a portion of the instruction identified by that mask. Each mask identifies instruction bytes which form a valid instruction. In one embodiment, scan bus 312 conveys four eight-bit masks identifying the first four valid instructions found within the eight bytes associated with the start and end byte information conveyed to instruction scanning unit 300. The masks produced on scan bus 312 are conveyed to instruction alignment unit 206, along with information on SCAN0 previous line bus 306, scan overflow bus 308, error detection bus 310, for use in locating valid instruction bytes from a plurality of instructions associated with the start and end byte information processed by instruction scanning unit 300.

Special checking subunit 328 is included to generate error information associated with start and end byte information as well as to provide scalability functionality. Scalability functionality is functionality that allows multiple instruction scanning units similar to instruction scanning unit 300 to operate simultaneously on a larger plurality of contiguous instruction bytes. In one embodiment, the scalability functionality of special checking subunit 328 includes detecting that an instruction ends in the eight bytes being scanned but does not begin in that eight bytes, and detecting that an instruction begins in the eight bytes being scanned by does not end in that eight bytes.

As mentioned above, IVAL generation subunit 314 receives end byte information associated with a plurality of contiguous instruction bytes. IVAL generation subunit 314 generates an instruction valid value associated with each byte in the plurality of contiguous instruction bytes. Instruction valid values are values which identify bytes which may form a valid instruction. In one embodiment, the instruction valid values generated by IVAL generation subunit 314 are masks as described above. Each instruction valid value generated by IVAL generation subunit 314 identifies a potentially valid instruction beginning at the associated byte within the contiguous instruction bytes being scanned. The potentially valid instruction ends at the byte associated with the first end bit encountered in the associated end byte information subsequent to the byte position of the associated byte. Furthermore, the end bit corresponding to the associated byte is included in determining the end of the potentially valid instruction. Since the start byte information is not available to IVAL generation subunit 314, an instruction valid value is generated for each byte being scanned as if that byte were a start byte. Therefore, the instruction valid values identify potentially valid instructions. The correct instruction valid values may then be selected from this set of instruction valid values according to the start byte information, as will be described below.

PCSTART generation subunit 316 and NSTART generation subunit 322 are a pair of subunits which generate an instruction start count for each byte being scanned. The instruction start count for a particular byte indicates the number of instructions which start within the eight bytes being scanned but prior to the particular byte. This information, along with the start byte information, may be used to determine which of the instruction valid values generated from IVAL generation subunit 314 are the correct instruction valid values.

In one embodiment, PCSTART generation subunit 316 generates intermediate instruction start counts according to a set of scan regions within the plurality of contiguous instruction bytes being scanned. In one embodiment, four scan regions are used. The first scan region comprises the first byte of the contiguous instruction bytes being scanned. The second scan region includes the second through fourth bytes, while the third scan region includes the fifth through seventh bytes. Finally, the fourth scan region comprises the eighth byte being scanned. For a particular byte within the contiguous bytes being scanned, the associated intermediate instruction start count indicates the number of instructions which start prior to that particular byte but within the scan region that includes the particular byte. Additionally, an instruction which starts in the last byte of the scan region prior to the scan region that includes the particular byte is included in the associated intermediate instruction start count. By generating these intermediate instruction start counts, the logic gates embodying the function may be advantageously limited to a relatively small number of inputs while still utilizing a parallel scanning technique, as will be explained in more detail below. In one embodiment, the intermediate instruction start counts are decoded counts such that a bit set in one position of the count indicates zero prior start bytes; a bit set in another position of the count indicates one prior start byte; etc. These intermediate instruction start counts are conveyed on PCSTART bus 318 to NSTART generation subunit 322.

NSTART generation subunit 322 accepts the intermediate instruction start counts generated by PCSTART generation subunit 316 and generates the instruction start counts mentioned above. A particular instruction start count is generated by shifting the instruction start count of the last byte of the previous scan region by the intermediate instruction start count associated with a particular byte of the current scan region. Since the intermediate instruction start count values and the instruction start count values are decoded, the shifting adds the intermediate instruction start count of each byte to the instruction start count of the last byte of the previous scan region. In this manner, the correct instruction start count for each byte may be generated. In one embodiment, the instruction start counts and intermediate instruction start counts convey a value between zero and three. Furthermore, a value may be conveyed indicative of four or more instruction starts. NSTART generation subunit 322 conveys the instruction start counts to scan bus generation subunit 326 on NSTART bus 320.

Scan bus generation subunit 326 selects a plurality of scan bus values from the instruction valid values conveyed on IVAL bus 324. The plurality of scan bus values are conveyed on scan bus 312. In one embodiment, up to four scan bus values are selected corresponding to the first four valid instructions contained within the plurality of contiguous instruction bytes being scanned. A particular instruction valid value is selected by scan bus generation subunit 326 if the start byte information indicates that the associated byte is a start byte and the instruction start count associated with that byte is between zero and three. The first scan value conveys the instruction valid value associated with an instruction start count of zero. Therefore, the first scan value identifies a valid instruction associated with the first start byte within the plurality of contiguous instruction bytes being scanned (i.e. the first valid instruction within the plurality of contiguous instruction bytes). The second, third, and fourth scan values similarly identify the second, third, and fourth valid instructions within the plurality of contiguous instruction bytes being scanned, if that many valid instructions may be located.

As will be appreciated by one skilled in the art, at most four instruction valid values will be selected in this manner. Additionally conveyed on scan bus 312 is an overflow instruction valid value which is connected to the instruction valid value associated with the first byte of the plurality of contiguous instruction bytes. This overflow value is indicative of the bytes which form a portion of an instruction which ends within the plurality of contiguous bytes currently being scanned but does not begin within the plurality of bytes currently being scanned. Instruction scanning unit 300 is a parallel instruction scanning unit which (as will be shown below) may be implemented in relatively few cascaded levels of logic. Advantageously, such an instruction scanning unit identifies multiple valid instructions per clock cycle and may allow a short clock cycle design.

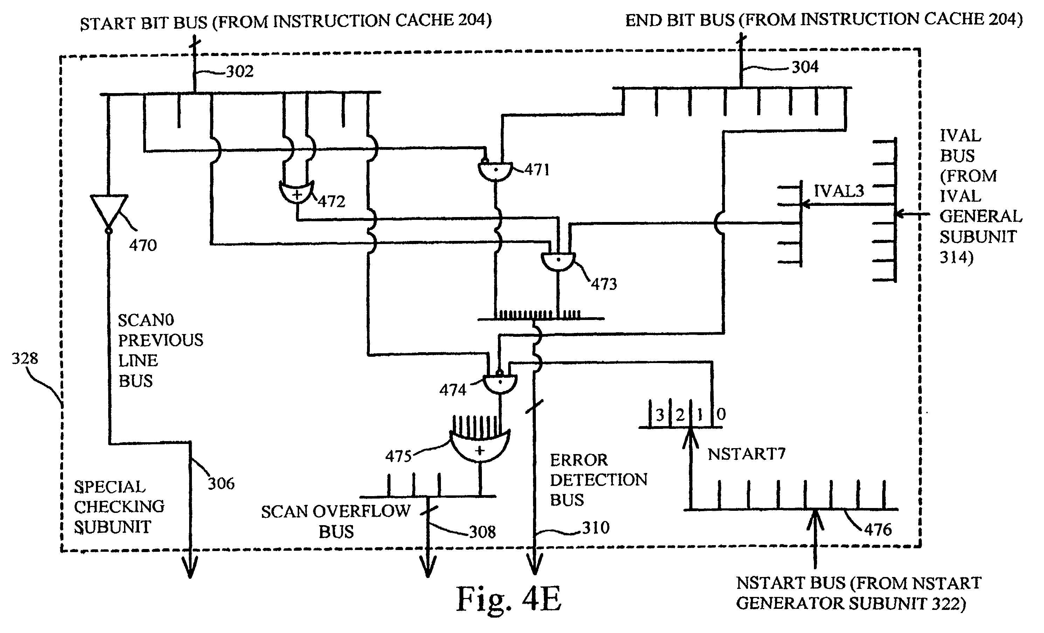

In parallel with the above subunits, special checking subunit 328 provides the aforementioned error checking and scalability functionality. In one embodiment, special checking subunit checks for two types of errors. First, between each two bytes indicated as start bytes, one end byte should exist. Special checking subunit 328 detects two successive start bytes without an intervening end byte. Furthermore, each byte which is indicated as the end of an instruction should be immediately followed by a start byte. Special checking subunit 328 also ensures that this relationship is true for each end byte within the plurality of contiguous instruction bytes being scanned. Exemplary logic circuits for providing these checks will be described below with respect to Figure 4E.

Additionally, special checking subunit 328 provides scalability functionality. If several instruction scanning units 300 were to be used in parallel to process a larger number of contiguous instruction bytes, then instructions may have some bytes scanned by one instruction scanning unit and other bytes scanned by another instruction scanning unit. This may happen if an instruction begins in the plurality of contiguous bytes scanned by one instruction scanning unit and ends in the plurality of contiguous bytes scanned by another instruction scanning unit. The instruction scanning unit detects instructions which begin in the plurality of contiguous instruction bytes being scanned but which do not end within the plurality of contiguous instruction bytes being scanned. If such a condition is detected, a signal associated with the scan bus value for which the condition is detected is asserted on scan overflow bus 308. Therefore, scan overflow bus 308 includes a signal associated with each scan value conveyed on scan bus 312. Furthermore, instruction scanning unit 300 detects instructions which end in the plurality of contiguous instruction bytes currently being scanned but do not begin in these bytes. This detection is provided by detecting whether or not the first byte of the plurality of contiguous bytes is the start of an instruction. If it is the start of an instruction, then no instruction that ends in the current line begins in the previous line. If it is not the start of an instruction and no error condition is detected, then the bytes up to the first end byte are the end of an instruction which begins in a previous plurality of contiguous bytes. The instruction valid value indicative of these bytes is conveyed on the overflow portion of scan bus 312. The overflow detection is conveyed on SCAN0 previous line bus 306.

As will be appreciated by those of skill in the art, special checking subunit 328 allows a number of instruction scanning units to be used in parallel. Each instruction scanning unit indicates when an instruction overflows to the next instruction scanning unit and provides an instruction valid value indicative of the bytes within its plurality of contiguous bytes that form a portion of the overflowing instruction. The subsequent instruction scanning unit indicates that an instruction has overflowed from the previous unit and provides an instruction valid value on the overflow portion of scan bus 312 (as noted above) which is indicative of the bytes which form the remainder of the overflowing instruction. This information could be advantageously used to form the identified instruction. Additionally, these values may be used by circuits outside of instruction scanning unit 300 to capture the first portion of an overflowing instruction. The remainder of the overflowing instruction would be indicated by the instruction scanning unit in the following cycle, and the external logic could then form the overflowing instruction from the two sets of bytes.

The operation of instruction scanning unit 300 may be further illuminated through the use of an example. The example will be presented for the embodiment of instruction scanning unit 300 that scans eight contiguous instruction bytes and provides up to four scan bus values per clock cycle. Therefore, this embodiment generates eight instruction valid values on IVAL bus 324 (one for each of the eight instruction bytes). These buses will be labeled IVAL0, IVAL1, IVAL2, IVAL3. IVAL4, IVAL5, IVAL6,IVAL7, and IVAL8. Also, the four scan regions described above will be processed by PCSTART generation subunit 316. The values of the intermediate instruction start counts will be conveyed on PCSTART0, PCSTART1, PCSTART2, PCSTART3, PCSTART4, PCSTART5, PCSTART6, and PCSTART7. Each value includes four bits which indicate the number of start bytes prior to the current byte. If bit 0 is set, there are zero start bytes prior to the current byte. If bit 1 is set, there is one start byte prior to the current byte. If bit 2 is set, there are two start bytes prior to the current byte, If bit 3 is set there are three start bytes prior to the current byte. If no bits are set, there are four or more start bytes prior to the current byte. The instruction start counts generated by NSTART generation subunit 322 are conveyed on NSTART0, NSTART1, NSTART2, NSTART3, NSTART4, NSTART5, NSTART6, and NSTART7. Finally, the scan bus values are conveyed on SCAN0, SCAN1, SCAN2, and SCAN3. In each ofthe above assigned names, the number indicates the associated byte. Therefore, IVAL0, PCSTART0, and NSTART0 are associated with the first of the eight contiguous instruction bytes (i.e. byte 0). Similarly, IVAL1, PCSTART1, and NSTART1 are associated with the second of the eight contiguous instruction bytes (i.e. byte 1), etc. SCAN0 is the scan value indicating the first valid instruction within the eight contiguous instruction bytes. Similarly, SCAN1 is the scan value indicating the second valid instruction within the eight contiguous instruction bytes, etc.

For this example, the start byte and end byte information indicates the following values:

| | Byte position |
|---|---|
| | 01234567 |
| Start byte information | 10001110 |
| End byte information | 00011101 |

In this embodiment, the start byte information and end byte information comprises a bit for each byte. If the bit is set, the corresponding byte is a start (or end) byte. If the bit is clear, the corresponding byte is not a start (or an end) byte. Therefore, for this example the first valid instruction begins at byte 0 and ends at byte 3. The second valid instruction begins and ends at byte 4 (therefore, the second valid instruction is a single byte). Similarly, the third valid instruction begins and ends at byte 5. Finally, the fourth valid instruction begins at byte 6 and ends at byte 7. The correct scan bus values for this example would be:

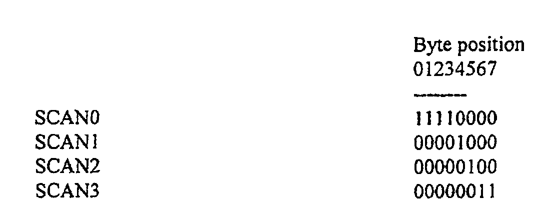

When the aforementioned start and end byte values are conveyed to instruction scanning unit 300, IVAL generation subunit 314 generates eight instruction valid values as described above. IVAL0 generates binary ones beginning in byte 0 and ending at the occurrence of the next end bit, which is at byte 3. IVAL1 generates binary ones beginning at byte 1 and ending at the occurrence of the next end bit, again at byte 3. IVAL4 generates binary ones beginning at byte 4 and ending at the occurrence of the next end bit (now at byte 4). A list of the generated instruction valid values is shown below.

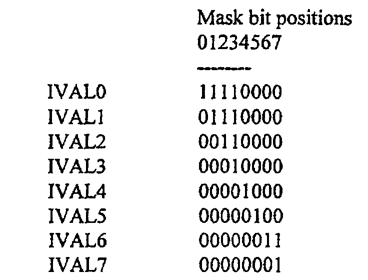

PCSTART generation subunit 316 generates intermediate start counts according to the scan regions defined above. Therefore, PCSTART0 contains a zero start count since no bytes precede PCSTART0. PCSTART3, however, contains a count of one since PCSTART0 is a start byte, it is the last byte of the previous scan region, and no other start bits occur in the current scan region. PCSTART5 contains a count of one as well, since byte position three (the last byte position of the second scan region) is not a start bit and one start bit exists in third scan region prior to byte five (i.e. byte 4). The values for the intermediate instruction start counts are shown below for this example:

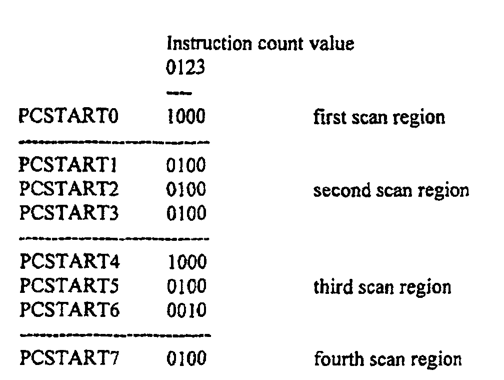

NSTART generation subunit 322 receives the intermediate instruction start counts and generates the instruction start counts. Since the counts for the first and second scan regions already contain information about each start byte prior to the associated position (the counts in the second scan region include the last and only byte of the first scan region), these counts are unchanged by NSTART generation subunit 322. The intermediate instruction counts in the third region (i.e. PCSTART4, PCSTART5, and PCSTART6) provide shift amounts for the count in PCSTART3. In this example, PCSTART3 contains a count of one, PCSTART4 a count of zero, PCSTART5 a count of one, and PCSTART6 a count of two. Therefore, NSTART4 conveys PCSTART3 shifted by zero (i.e. one), NSTART5 conveys PCSTART3 shifted by one (i.e. two), and NSTART6 conveys PCSTART3 shifted by two (i.e. three). NSTART7 conveys NSTART6 shifted by two (the amount on PCSTART7). This causes NSTART7 to convey a value of 4 binary zeros, indicative of four or more start bits prior to byte 7. The values for each instruction start count are shown below for this example:

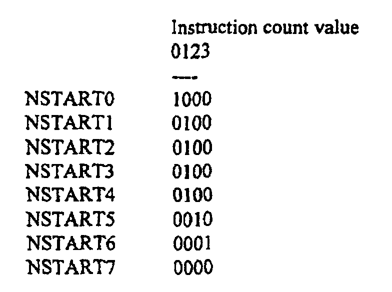

Scan bus generation subunit 312 receives the NSTART and IVAL values shown above as its instruction start counts and instruction valid values along with the original start byte information, as noted above. Scan bus generation subunit 312 then generates its four scan values from the received values. Since byte zero is a start byte and its associated instruction start count (NSTART0) is zero, the instruction valid value associated with byte zero (IVAL0) is selected as SCAN0. Byte four is also a start byte, and its associated instruction start count (NSTART4) is one. Therefore, the instruction valid value associated with byte four (IVAL4) is selected as SCAN1. Similarly, IVAL5 and IVAL6 are selected as SCAN2 and SCAN3, respectively. Therefore, the final scan values are shown below and equal the expected results for the example:

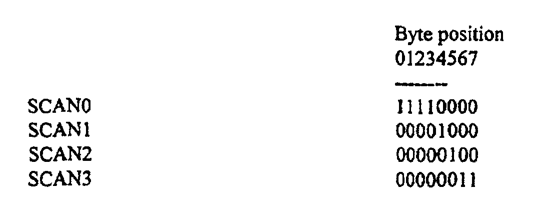

The preceding example contained a full complement of four valid instructions. The following example contains two valid instructions, and will be presented in tabular format below. It is noted that exemplary register transfer level (RTL) code is included in this disclosure.

| | Byte position |
|---|---|
| | 01234567 |
| Start byte information | 10010000 |
| End byte information | 00100010 |

Therefore, the expected scan bus results would be:

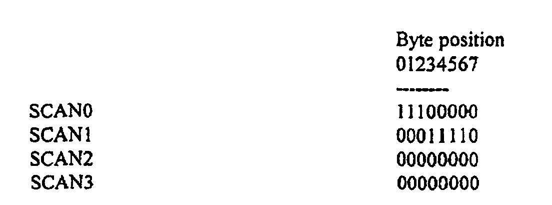

The instruction valid values generated by IVAL generation subunit 314 with this example of end byte information are:

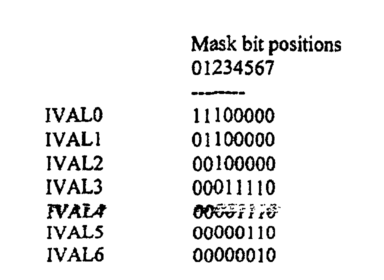

The intermediate instruction start counts generated by PCSTART generation subunit 316 according to this example's start byte information are:

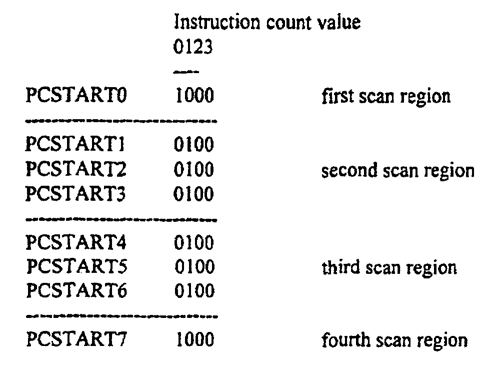

The instruction start counts generated by NSTART generation subunit 322 according to this examples PCSTART values would then be:

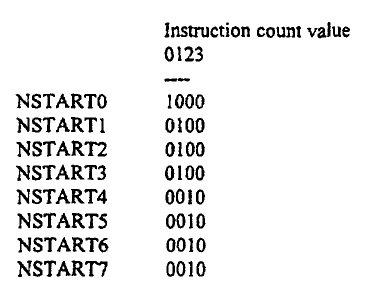

Therefore, since byte 0 is a start byte and NSTART0 indicates zero previous start bytes, SCAN0 is selected to be IVAL0. Byte 3 is a start byte and NSTART3 indicates one previous start byte, so SCAN1 is selected to be IVAL3. There are no other start bits, so SCAN2 and SCAN3 are selected to be zero.

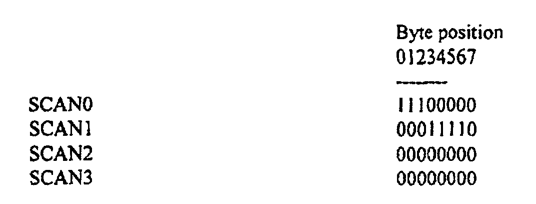

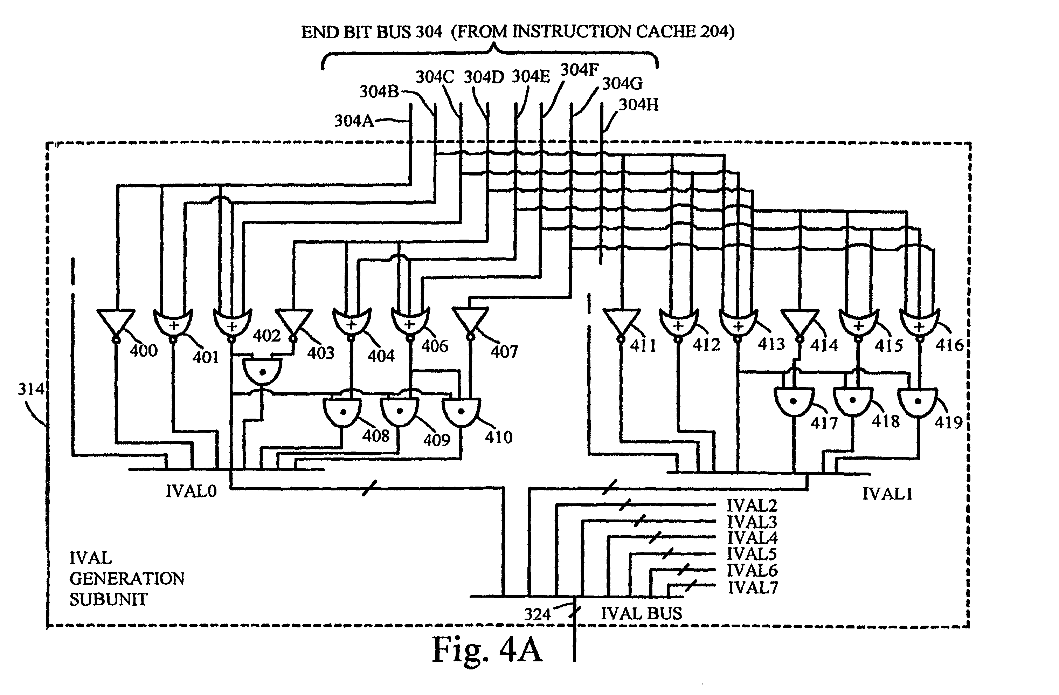

Turning next to Figures 4A through 4E, exemplary logic diagrams of portions of the subunits shown in Figure 3 are shown. Figure 4A shows an exemplary rogic diagram or a portion of IVAL generation subunit 314. Exemplary logic circuits for the generation of IVAL0 and IVAL1 are shown. IVAL0 is a portion of IVAL bus 324 conveying the instruction valid value associated with the first of the eight contiguous instruction bytes, and IVAL1 is a portion of IVAL bus 324 conveying the instruction valid value associated with the second of the eight contiguous instruction bytes. Other logic circuits (not shown) generate the instruction valid values associated with the other instruction bytes. The instruction valid values for these bytes are conveyed on IVAL2 through IVAL7. The values conveyed on IVAL0 through IVAL7 form IVAL bus 324, as shown in Figure 4A.

End bit bus 304 is shown as eight conductors 304A-304H in Figure 4A, indicative of the eight contiguous instruction bytes scanned by this embodiment of instruction scanning unit 300. Conductor 304A conveys the end bit for the first of the eight contiguous instruction bytes (referred to as byte 0), conductor 304B conveys the end bit for the second of the eight contiguous instruction bytes (referred to as byte 1), etc. An examination of the exemplary circuits shows that a particular bit for an instruction valid value is generated as the logical NOR of the end bits between the byte associated with the instruction valid value and the byte prior to the byte associated with the particular bit, inclusive. Therefore, the first bit of IVAL0 is a constant one (since there are no end bits to examine). Furthermore, the second bit of IVAL0 is the inverted end bit for byte 0 (i.e. the logical NOR of a single bit is an inversion). The third bit of IVAL0 is the NOR of the end bits for bytes 0 and 1, etc.

Inverter 400 provides the second bit of IVAL0, and NOR gate 401 provides the third bit of IVAL0. The NOR function for the fourth bit of IVAL0 is provided by NOR gate 402, while NOR gate 402, inverter 403, and AND gate 405 provide the NOR function for the fifth bit of IVAL0. Similarly, the sixth bit of IVAL0 is generated from NOR gate 402, NOR gate 404, and AND gate 408. The seventh bit of IVAL0 is generated by NOR gate 402, NOR gate 406, and AND gate 409 Finally, the eighth bit of IVAL0 is provided by NOR gate 402, NOR gate 406, inverter 407 and AND gate 410.

Similarly, the third bit of IVAL1 is the inverted end bit for byte 1. Note that the first bit (a constant zero) is not shown in Figure 4A, and the second bit is a constant one. The fourth bit of IVALI is the NOR of the end bit for bytes 1 and 2, etc. In this way, the first end bit that is detected following the associated byte causes the subsequent bits in the instruction valid value to be cleared. Bits between the associated byte and the first end bit are set.

Exemplary logic circuits for generating IVAL1 are shown in Figure 4A. The first bit of IVAL1 is not shown, since it is a constant zero. The second bit is a constant one. Inverter 411 provides the third bit of IVAL1, while the fourth bit is provided by NOR gate 412. The fifth bit of IVAL1 is generated by NOR gate 413. The sixth bit of IVAL1 is generated by NOR gate 413, inverter 414, and AND gate 417. NOR gate 413, NOR gate 415, and AND gate 418 combine to form the NOR function for the seventh bit of IVAL1. Finally, NOR gate 413, NOR gate 416, and AND gate 419 form the NOR function for the eighth bit of IVAL1.

It is noted that the embodiment of IVAL generation subunit 314 shown in Figure 4A employs eight bits of information forming IVAL0 but seven bits of information forming IVAL1. In fact, IVAL2 is comprised of six bits, IVAL3 of five bits, etc. This is because the bits representing bytes prior to the byte position for which the instruction valid value is generated are constant zeros and therefore may be omitted.

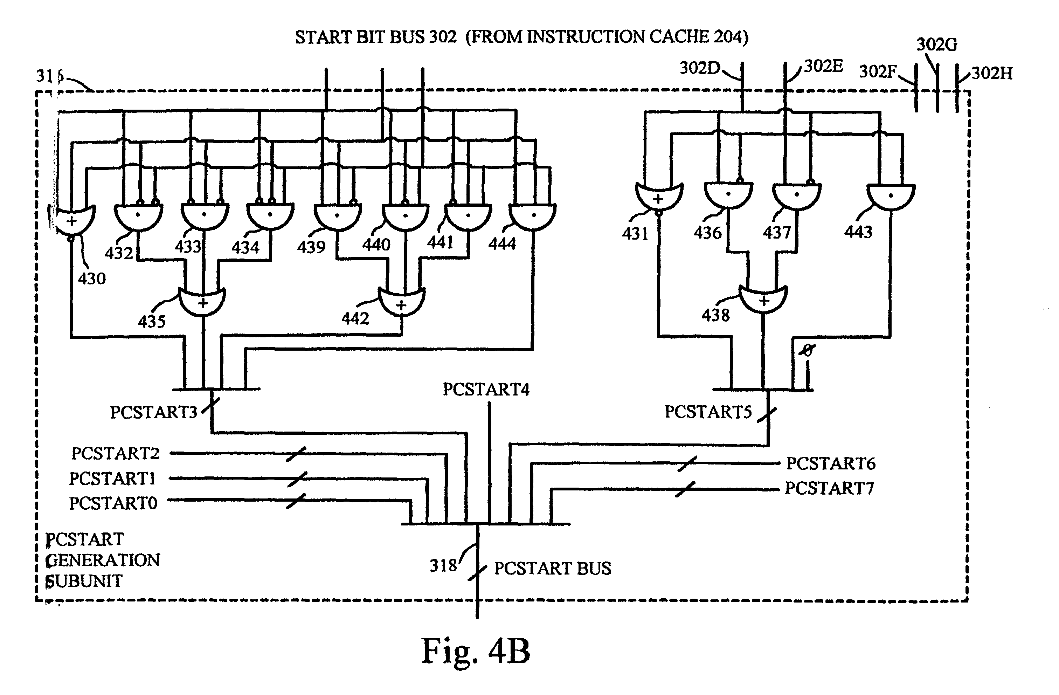

Turning now to Figure 4B, exemplary logic circuits forming a portion of PCSTART generation subunit 316 are shown. PCSTART generation subunit 316 receives start bit bus 302 from instruction cache 204. Start bit bus 302 is shown in Figure 4B as eight separate conductors which convey the eight start bits associated with the contiguous instruction bytes being scanned. Conductor 302A conveys the start bit associated with the first of the contiguous bytes (referred to as byte 0), conductor 302B conveys the start bit associated with the second of the contiguous bytes (referred to as byte 1), etc.

Figure 4B shows exemplary logic circuits for generating PCSTART3 and PCSTART5. PCSTART3 is the intermediate instruction start count for byte 3 (i.e. the fourth byte) of the eight contiguous bytes. PCSTART5 is the intermediate instruction start count for byte 5 (i.e. the sixth byte) of the eight contiguous bytes. Since PCSTART3 and PCSTART5 are in different scan regions, the portions of end bit bus 302 on which they operate are separate. Other logic circuits (not shown) generate intermediate instruction start counts for other bytes within the contiguous instruction bytes scanned by instruction scanning unit 300. For the following discussion with respect to Figure 4B, the term "previous start bit" refers to a start bit within the scan region associated with a particular intermediate instruction start count and to the start bit associated with the last byte of the previous scan region.

In this embodiment, each intermediate instruction byte count and each instruction byte count are decoded values. The first bit, when set, indicates that zero start bytes exist prior to the current byte. The second bit, when set, indicates that one start byte exists prior to the current byte, etc. Therefore, for intermediate start count generation, the first bit is set if none of the previous start bits are set. This is a NOR function of the associated previous start bits, and is shown as NOR gate 430 for PCSTART3 and NOR gate 431 for PCSTART5.

The second bit of an intermediate instruction start count indicates one previous start bit is set. Therefore, an AND/OR network may provide the value where each of the input terminals of the AND gate are inverted except for one. In this manner, if one and only one previous start bit is set, then the resulting intermediate instruction start count bit will be set. This function is provided by AND gate 432, AND gate 433, AND gate 434, and OR gate 435 for PCSTART3. AND gate 436, AND gate 437, and OR gate 438 provide a similar function for PCSTART5 generation.

Two previous start bits being set is indicated by setting bit two of the intermediate instruction start counts. An AND/OR network similar to the network for bit 1 may provide the value, except that two of the input terminals of the AND gates are not inverted. In this manner, if any two previous start bits are set but no more than two are set, then the resulting intermediate instruction start count bit will be set. AND gate 439, AND gate 440, AND gate 441, and OR gate 442 provide this function for the embodiment shown in Figure 4B for PCSTART3. Similarly, AND gate 443 provides the function for PCSTART5.

Finally, three previous start bits being set is indicated by setting bit three of the intermediate instruction start counts. AND gate 444 provides this function for PCSTART3. However, PCSTART5 can not have three previous start bits set in this embodiment. PCSTART5 has bits 3 and 4 of start bit bus 302 as its previous start bits, and so the largest number of previous start bits is two. Therefore, bit three of PCSTART5 is set to a constant zero.

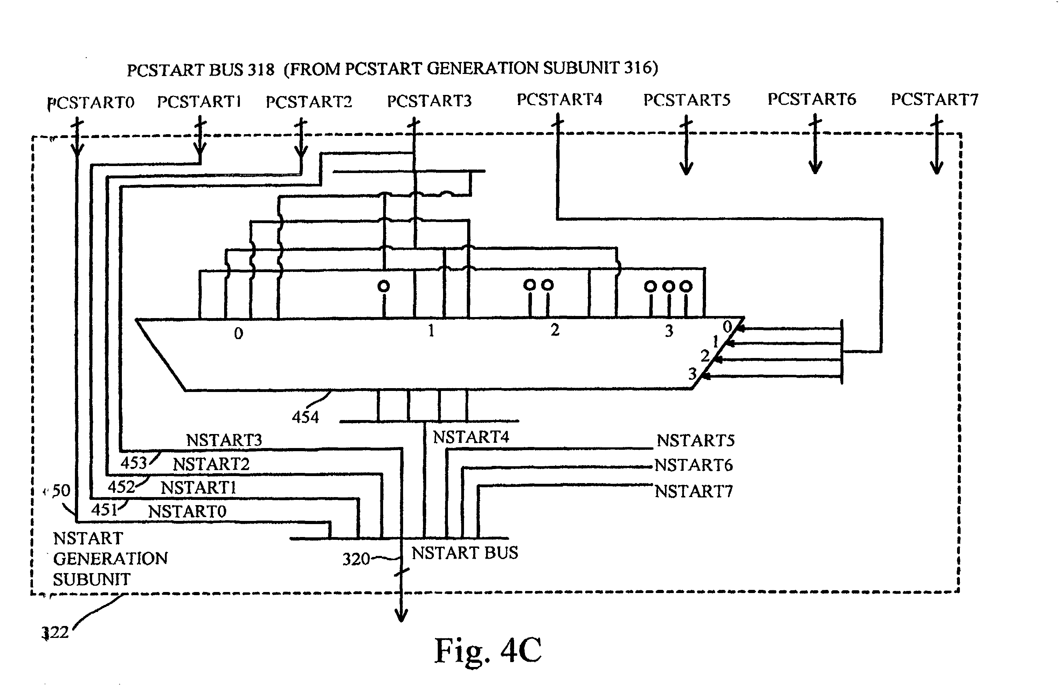

Turning now to Figure 4C, exemplary logic circuits for a portion of an embodiment of NSTART generation subunit 322 are shown. The generation of the instruction start count associated with byte four (i.e. the fifth byte) of the plurality of contiguous instruction bytes scanned by instruction scanning unit 300 is depicted (referred to as NSTART4). As noted above, the instruction start counts for the first two scan regions are unmodified from the intermediate instruction start counts. These unmodified counts are shown in Figure 4C as buses 450, 451, 452, and 453, respectively. As noted above, NSTART4 is PCSTART3 shifted by the value generated on PCSTART4. Multiplexor 454 is configured to provide this shifting. If the first bit of PCSTART4 is set, indicating zero previous start bits, then port 0 of multiplexor 454 will be selected and NSTART4 will be equal to PCSTART3. If, however, the second bit of PCSTART4 is set indicating one previous start bit, then port 1 of multiplexor 454 will be selected and NSTART4 will be equal to PCSTART3 shifted by one value. Ports 2 and 3 of multiplexor 454 are operated similarly with respect to the third and fourth bits of PCSTART4. Circuits for generating NSTART5, NSTART6, and NSTART7 are configured similarly.

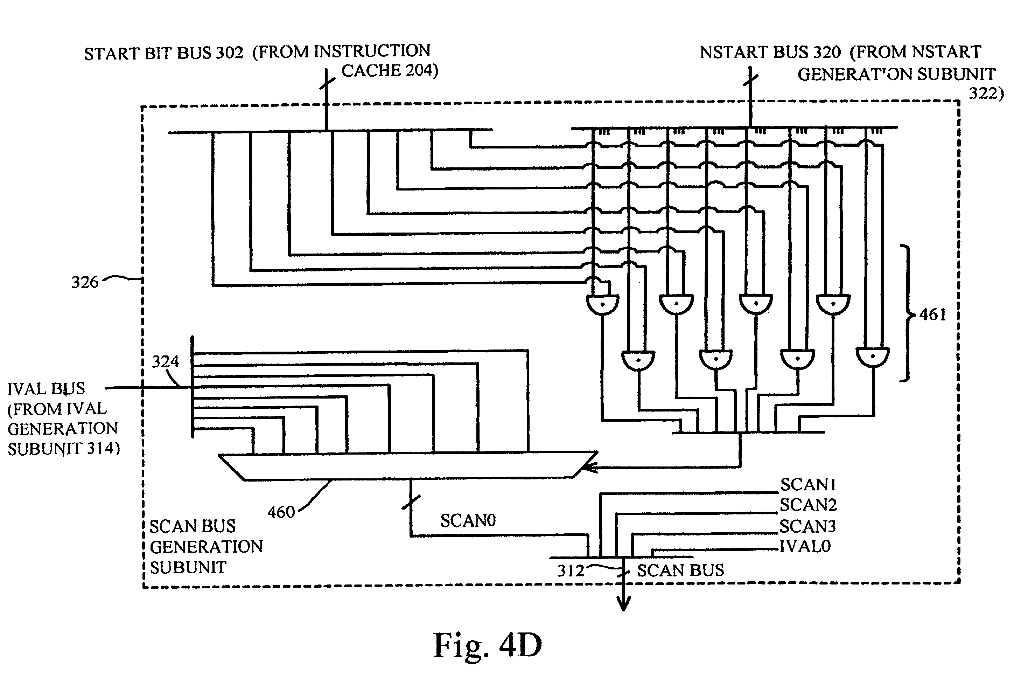

Turning next to Figure 4D, exemplary logic circuits for a portion of one embodiment of scan bus generation subunit 326 are depicted. In particular, logic circuits suitable for generating the first scan bus value (SCAN0) are shown. Multiplexor 460 is coupled to each instruction valid value generated by IVAL generation subunit 314. The corresponding start bits are received from instruction cache 204 on start bit bus 302, and the corresponding instruction start counts are received on NSTART bus 320.

As noted above, an instruction valid value is selected as SCAN0 if the corresponding start bit on start bit bus 302 is set and the corresponding instruction start count indicates that there are no previous instruction starts found within the plurality of contiguous instruction bytes scanned by instruction scanning unit 300. Therefore, an AND function of the corresponding start bit and the first bit of the corresponding instruction start count provides each select signal for multiplexor 460. AND network 461 provides the select signals for each port of multiplexor 460. Similar networks may be used to AND the start bits and the corresponding second bits of instruction start counts to select the instruction valid value for the second scan bus value (SCAN1). Furthermore, similar networks may form the selects for multiplexors selecting SCAN2 and SCAN3. SCAN0, SCAN 1, SCAN2, and SCAN3 are conveyed on scan bus 312 along with the value conveyed as IVAL0 (which is used for the an instruction overflowing from a previous plurality of contiguous instruction bytes).

Turning now to Figure 4E, exemplary logic circuits for implementing an embodiment of special checking subunit 328 are shown. Inverter 470 is used to generate SCAN0 previous line bus 306. As noted above, SCAN0 previous line bus 306 is indicative of an instruction which ends in the plurality of contiguous instruction bytes scanned by instruction scanning unit 300 but does not start in these bytes. This situation is detected by noting that an instruction does not start at the first byte of the bytes being scanned.

Also generated by special checking subunit 328 is the error detection bus 310. This bus conveys signals indicative of an error associated with the start and end information provided on start bit bus 302 and end bit bus 304. A first set of signals on error detection. bus 310 indicates that an end byte is detected for a byte within the bytes being scanned and the subsequent byte is not indicated as a start byte. AND gate 471 provides this check for the case where byte 0 is an end byte and byte I is not a start byte. Similar logic circuits may provide this check for other bytes. These signals may be advantageously used by external logic circuits (not shown) to detect which bytes within the plurality of contiguous bytes being scanned should be retumed to predecode unit 202. A second set of signals on error detection bus 310 are indicative of more than one start byte being indicated before an end byte is indicated. This encoding is an error since the encoding indicates a new instruction is starting before the previous instruction ends. OR gate 472 and AND gate 473 provide this functionality for checking start bytes associated with bytes 4 and 5 of the instruction bytes being scanned when byte 3 is a start byte and bytes 4 and 5 are prior to an end bit (as indicated by bit 5 of IVAL3). If bit 5 of IVAL3 is set, then no end bytes exist between byte 3 and byte 4. Therefore, if byte 4 or byte 5 is a start byte, an error condition exists. Similar circuits may provide this check for other combinations of start and end byte information.

Further included within special checking subunit 328 as shown in Figure 4E are exemplary logic circuits for detecting an instruction overflowing to a subsequent plurality of contiguous instruction bytes. For example, if byte seven is a start byte and is not an end byte, then the instruction starting at byte seven overflows to the subsequent plurality of instruction bytes. If the instruction associated with byte seven is selected as the first scan bus value (as indicated by the associated instruction start count), then the associated scan overflow bus signal should be asserted. AND gate 474 provides this functionality, and OR gate 475 allows similar gates to provide a similar check for the other instruction bytes. Similar AND and OR gates may be used for the second, third, and fourth scan bus values. It is noted that for other instruction bytes, a NOR function of the end byte information between that instruction byte and the seventh instruction byte may be performed prior to AND gate 474.

It is noted that Figures 4A-4E have used a standard symbol for combining bus conductors into a single bus or for splitting bus conductors from a single bus. For example, horizontal line 476 of Figure 4E is an indication that eight NSTART buses (NSTART0-NSTART7) form NSTART bus 322. These symbols have been included to keep the drawings uncluttered to facilitate understanding. These symbols should not be construed to indicate any physical device. As will be appreciated by those skilled in the art, a bus is simply a collection of conductors which are logically grouped together to form a value.

Disclosed below is an exemplary RTL description of one embodiment of the instruction scanning unit described above:

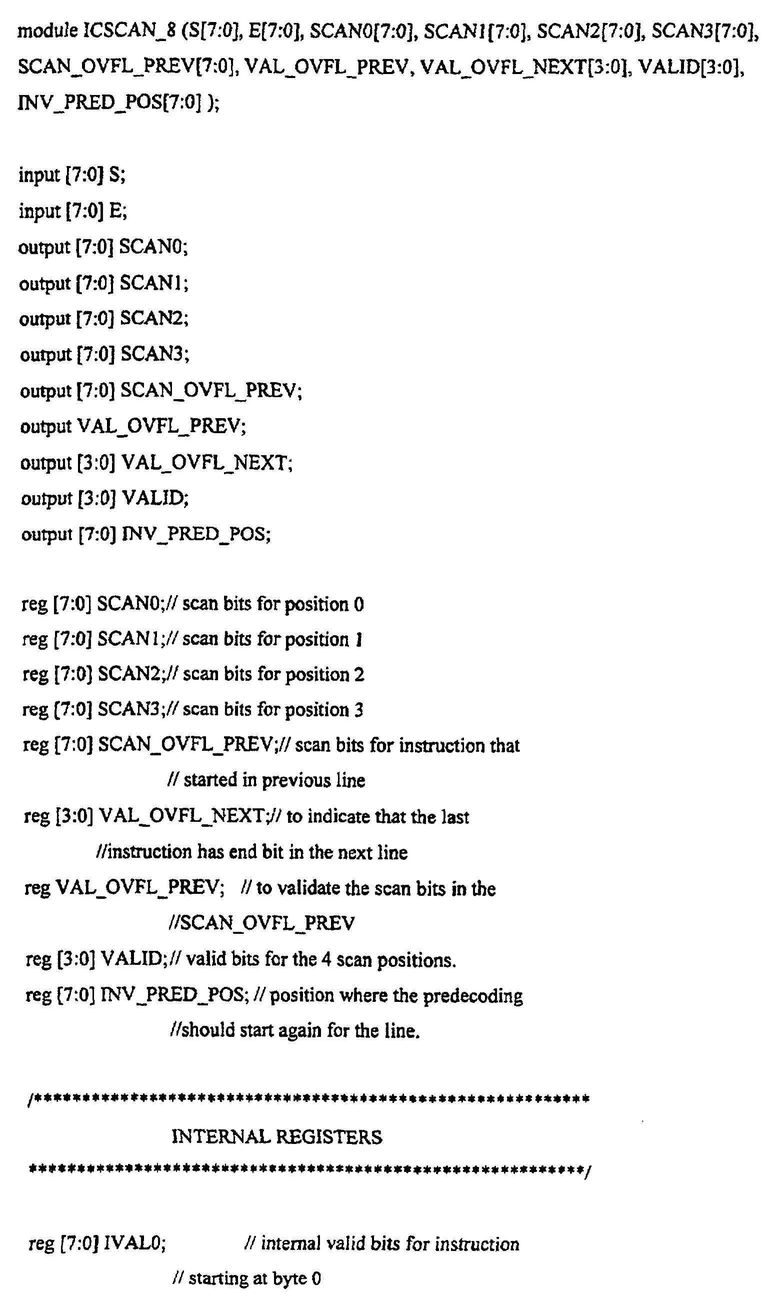

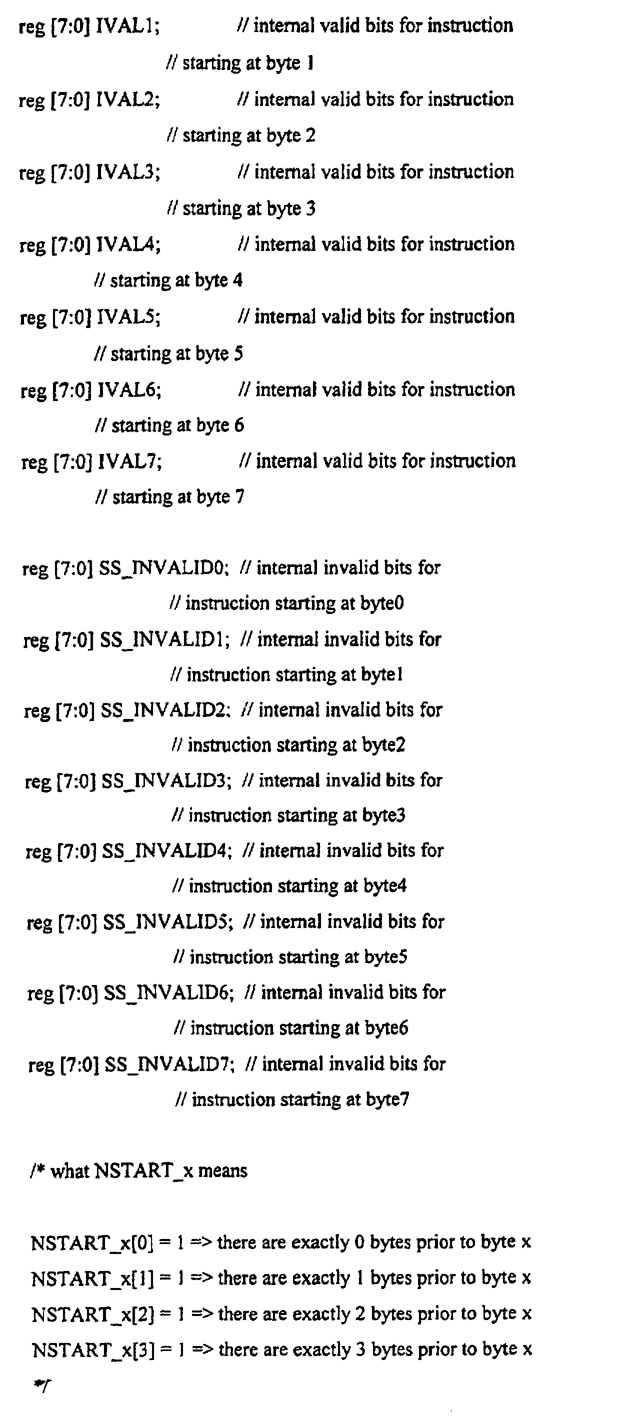

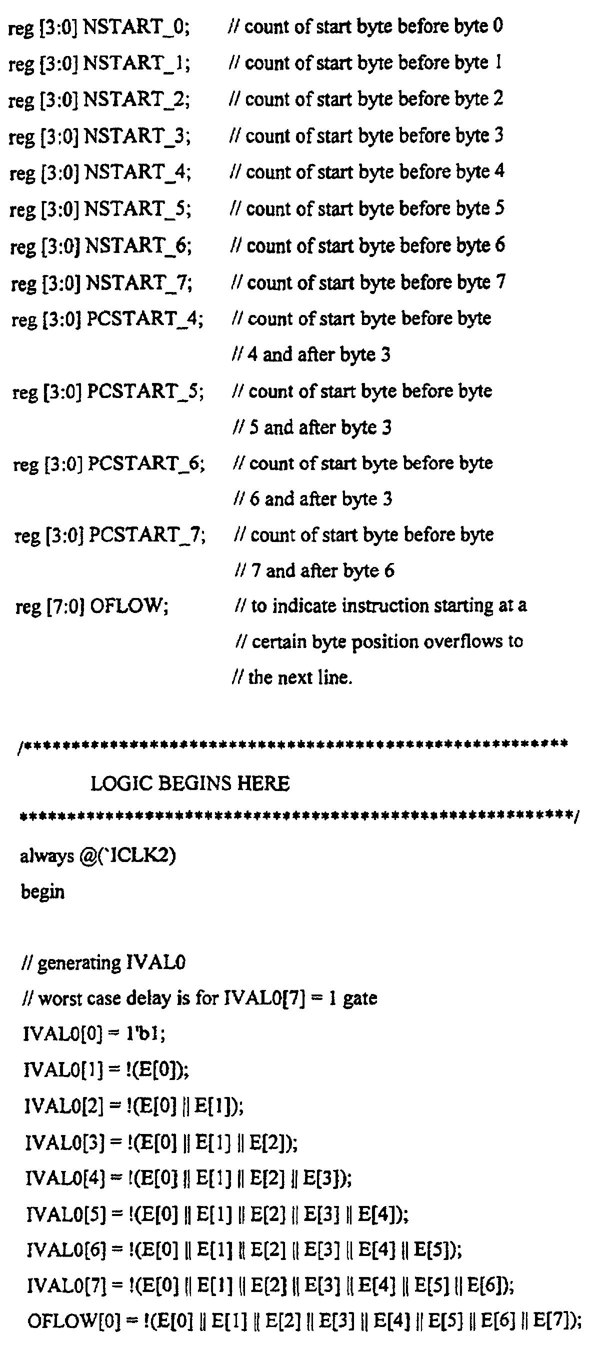

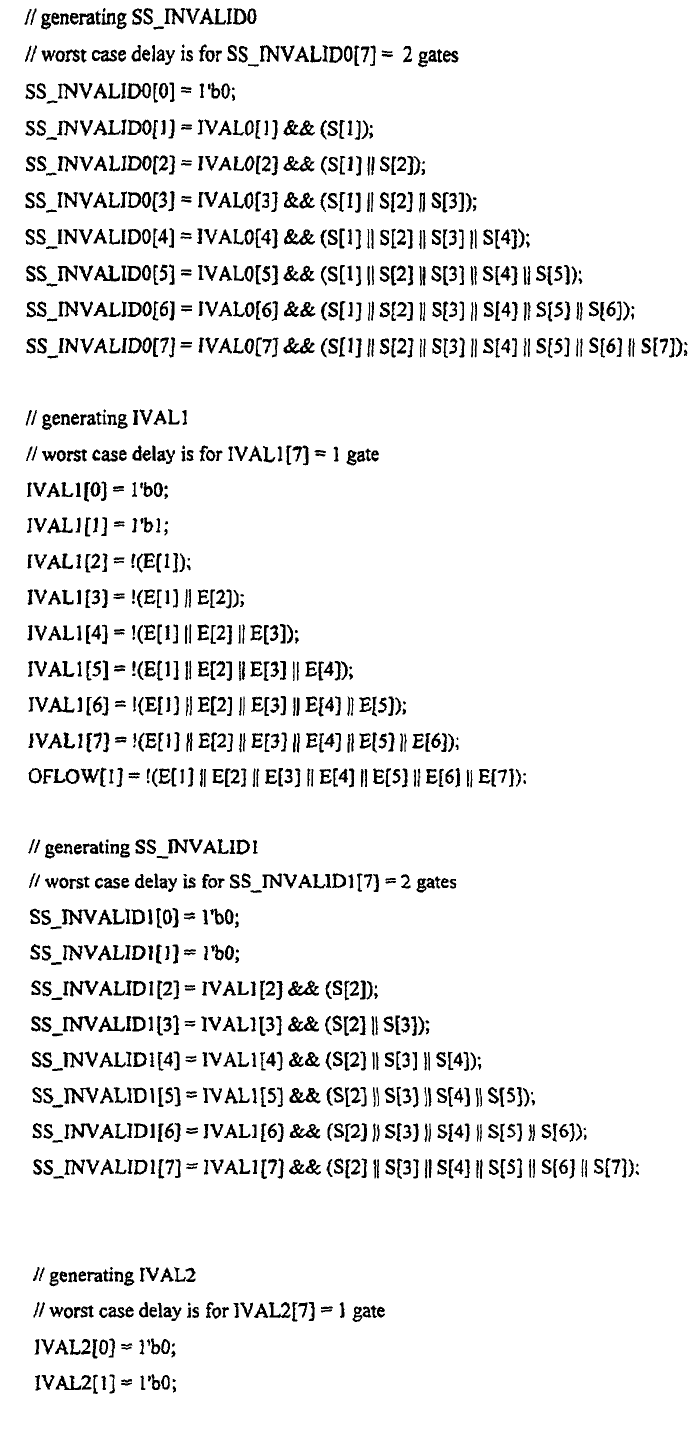

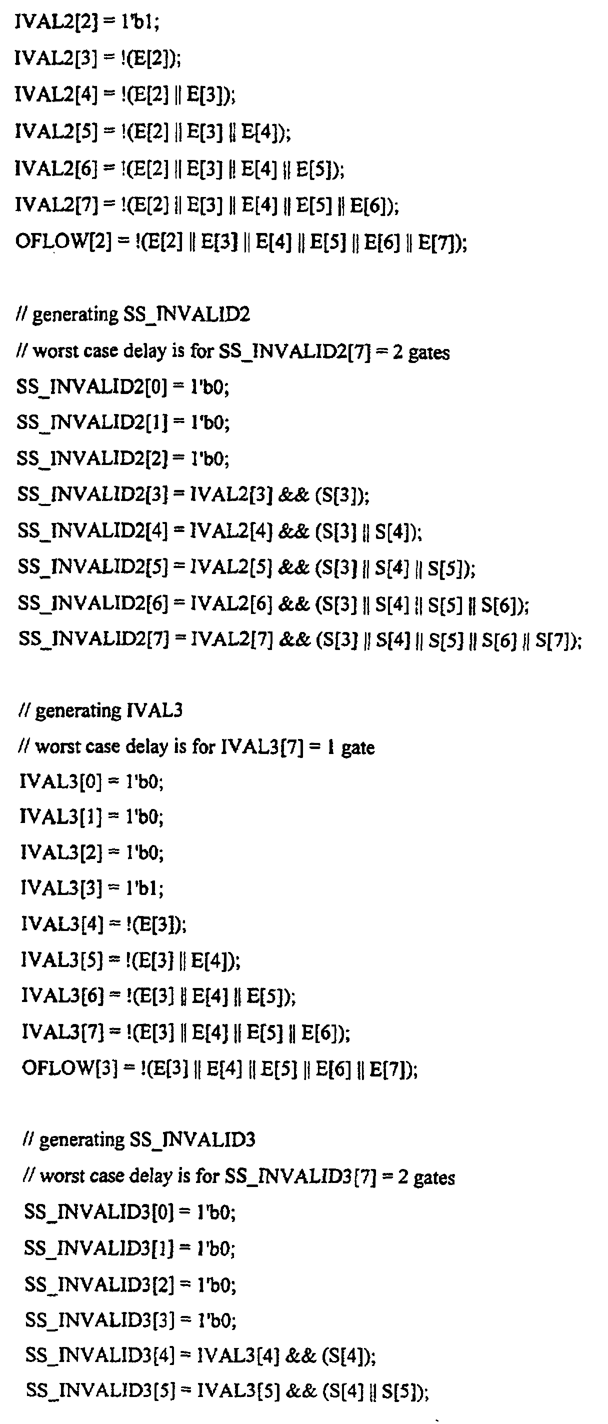

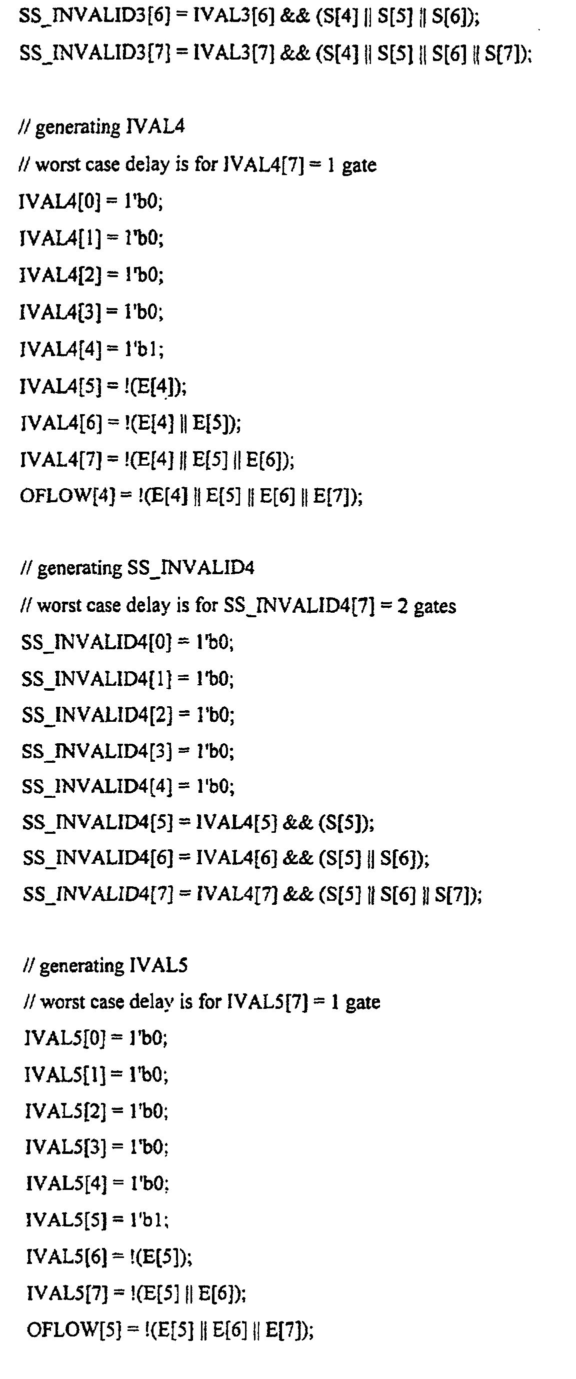

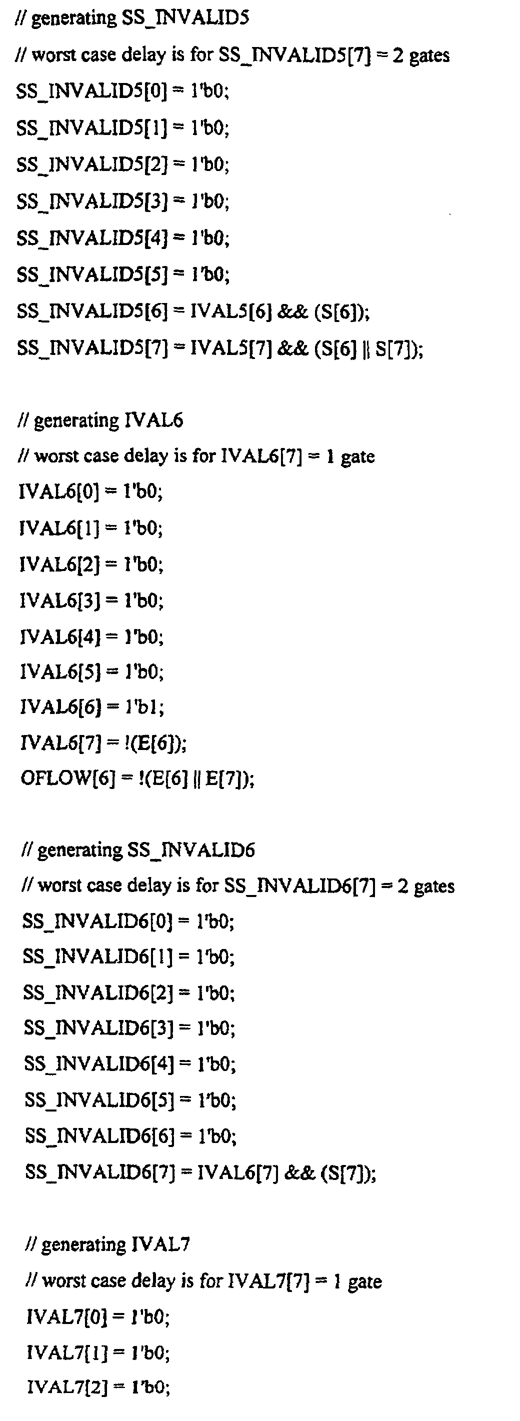

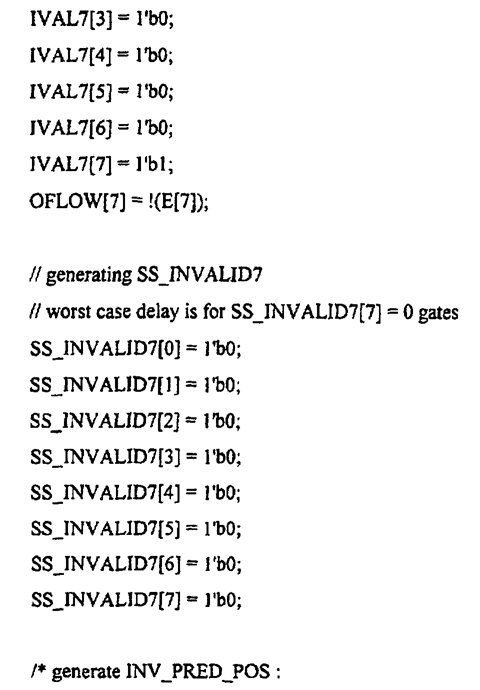

There are 2 cases when there can be this problem, either there is an instruction when there are two start bytes before we encounter an end byte; or the case when there is no start byte following an endbyte. Since the start and end bytes have ben qualified by the start pointer for the line. the end bytes preceding the first start byte in the line will be 0.

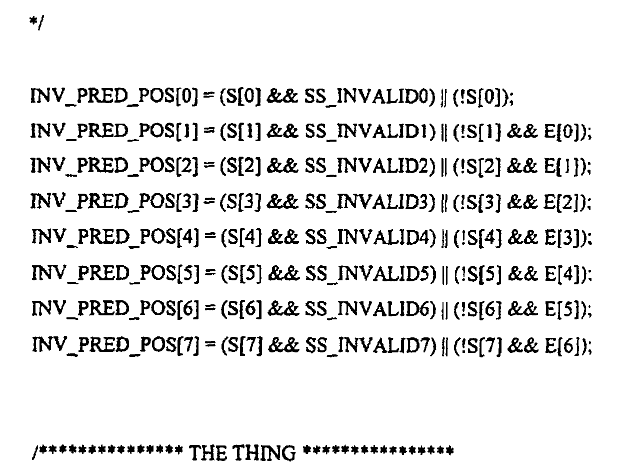

Now S[i] & IVALi[7:0] will give me the valid bits for all the instructions in the cache line. But we have to position them in the correct positions. i.e, we have to assign these to the 4 valid bits sets for the 8-bytes.

This can be done if we have information about the number of start bytes in the cache line prior to this byte.

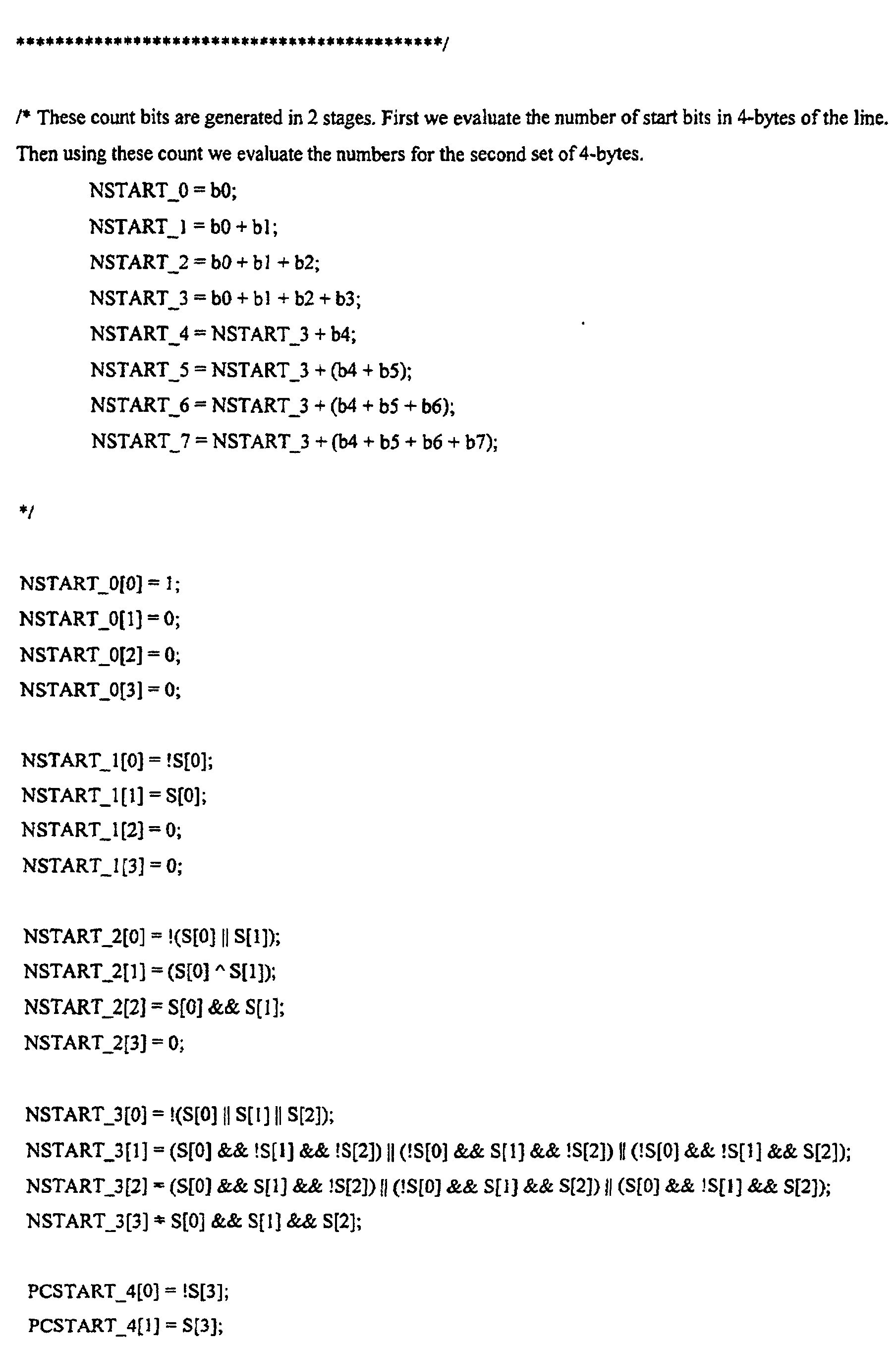

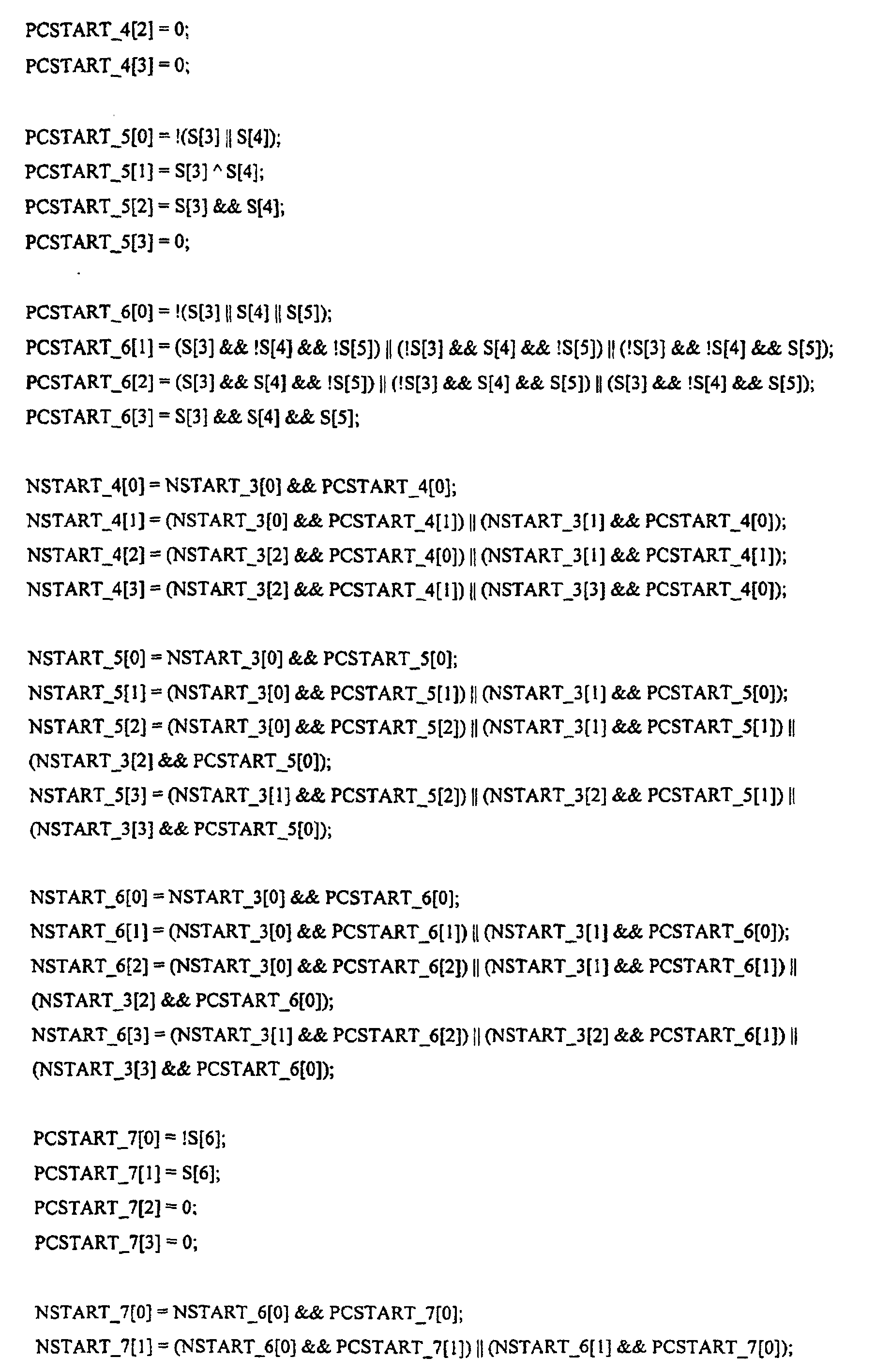

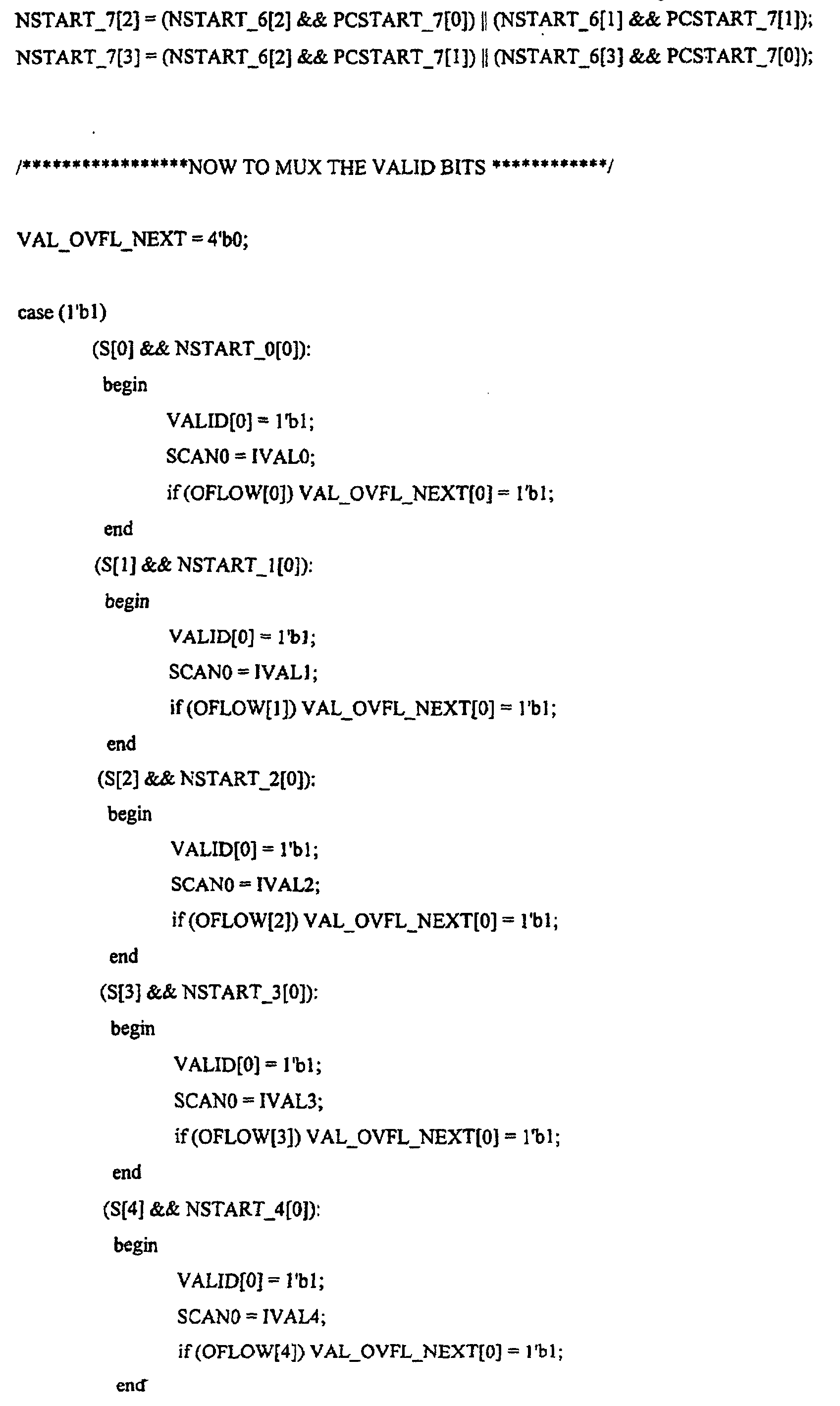

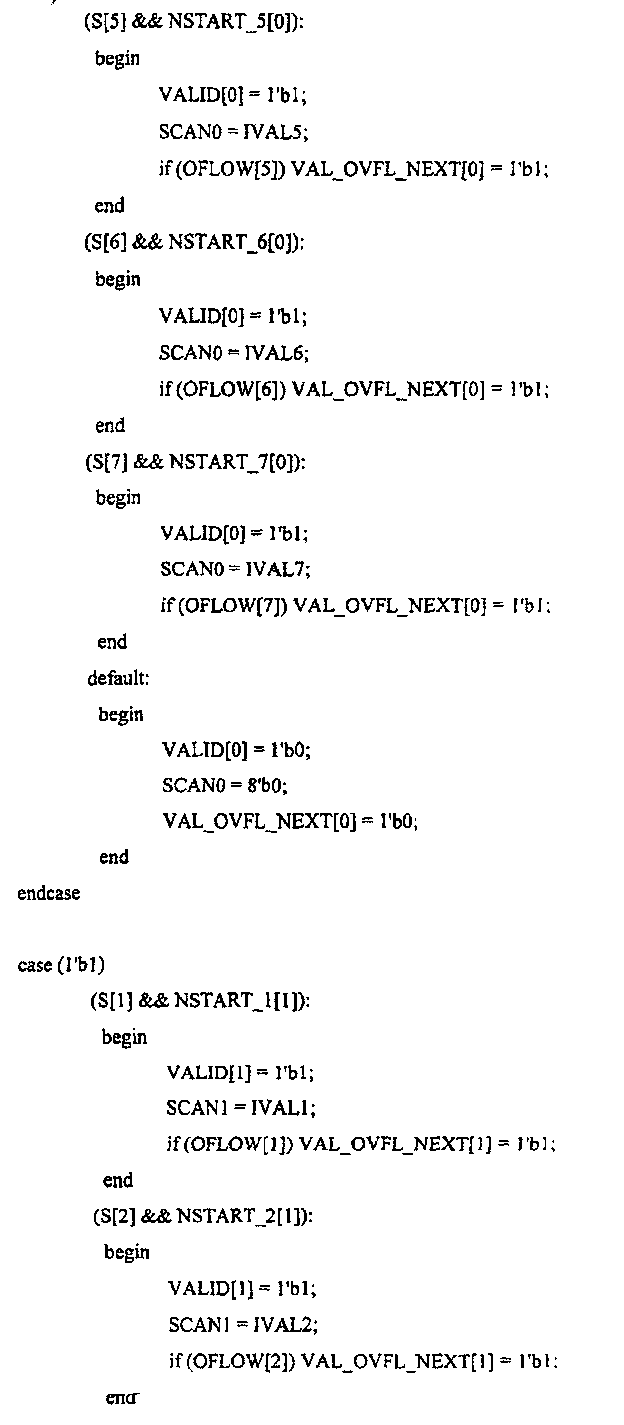

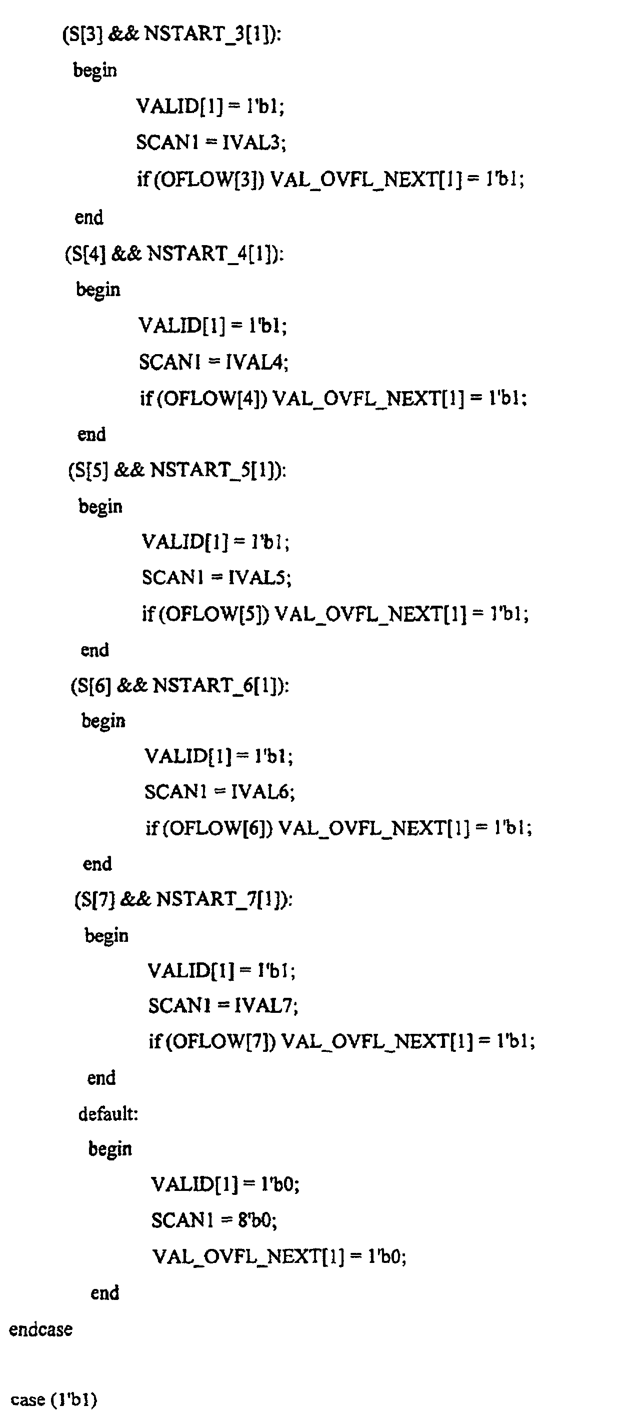

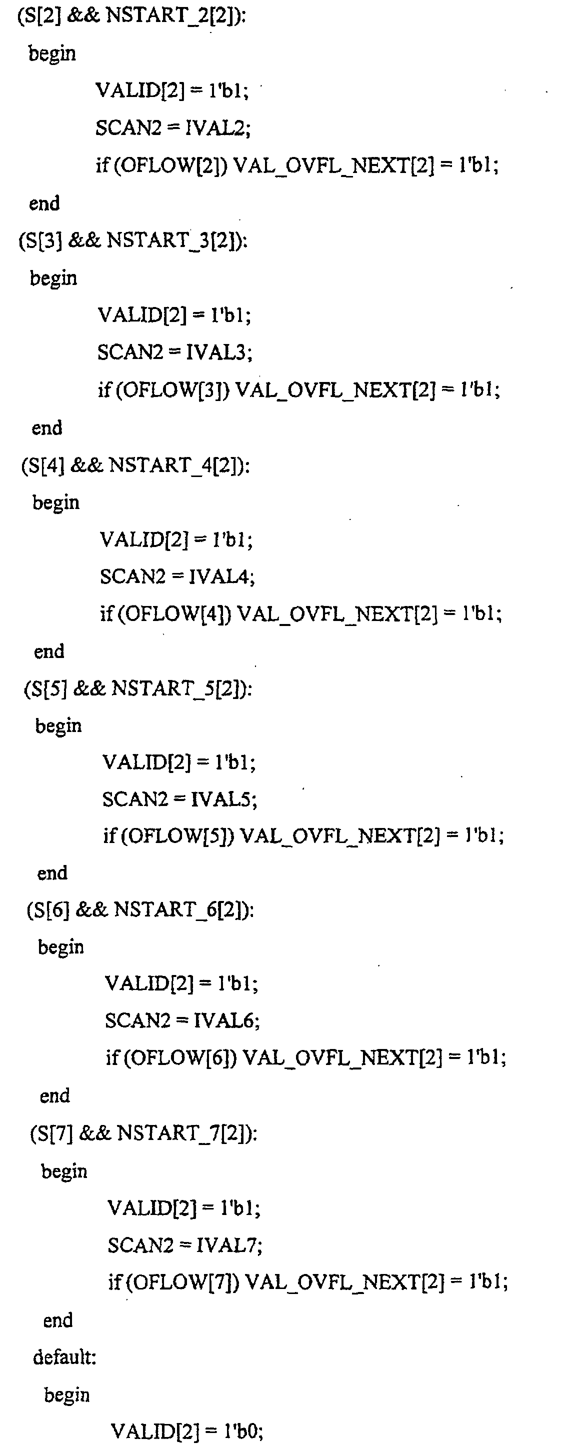

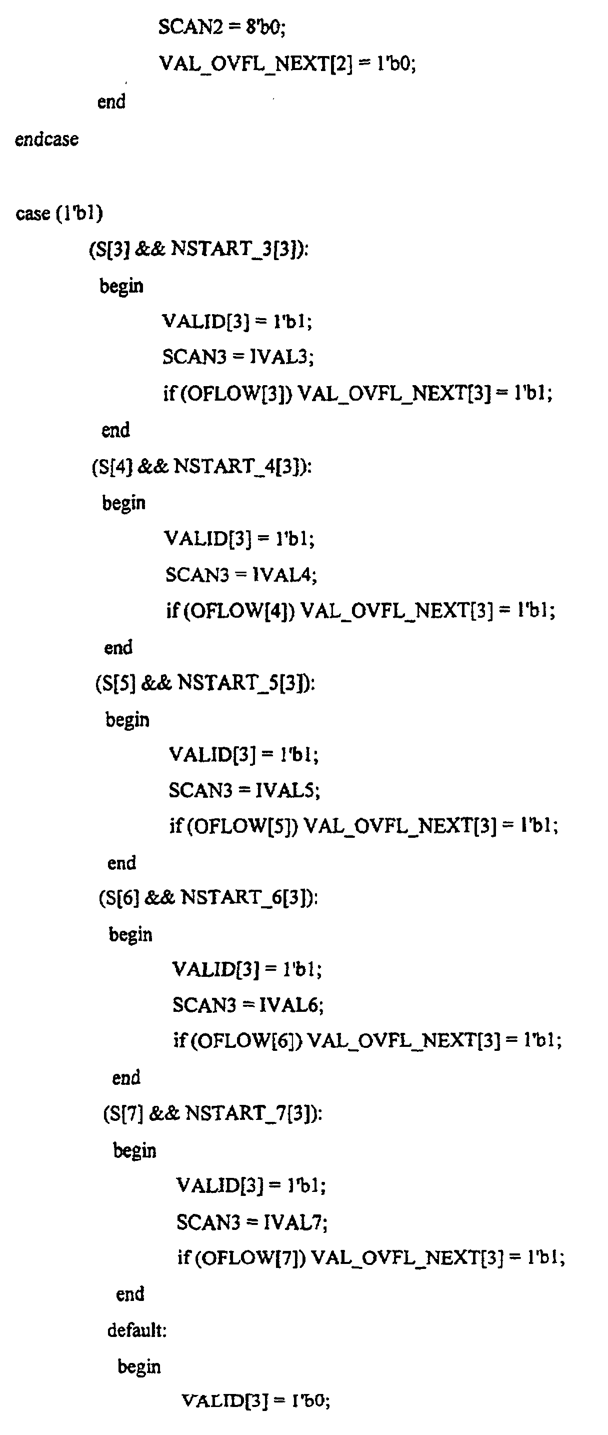

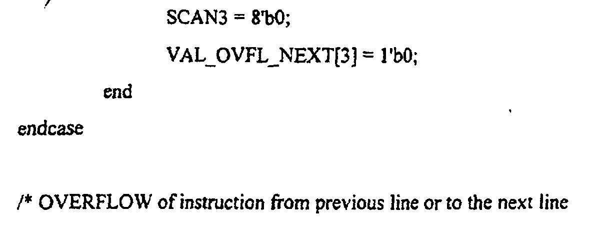

The case of the instruction overflowing from the previous set of 8 bytes: this can be detected by the case in which there is no start byte in byte 0.

The case of the valid instruction overflowing to the next line can be found by the case in which E[7] = 0 an there is at least one valid bit set

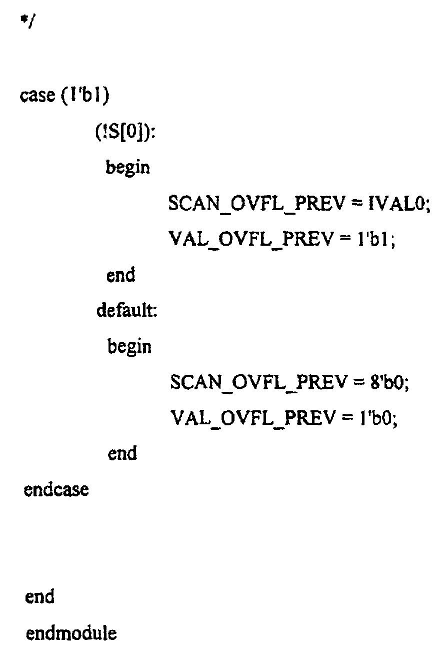

It is noted that the above discussion described an embodiment of instruction scanning unit 300 which scans eight contiguous instruction bytes for up to four instructions. Other embodiments may vary the number of contiguous instruction bytes as well as the maximum number of instructions scanned for. Figures 4A through 4E and the RTL description are also exemplary embodiments of instruction scanning unit 300. Many other embodiments are possible and specifically contemplated.

In accordance with the above disclosure, a parallel and scalable instruction scanning unit has been described. The instruction scanning unit unlizes two gate delays and three multiplexor delays to perform the scanning function, which may allow high frequency operation while advantageously locating multiple instructions in a single cycle. Both performance and frequency may be increased for a superscalar microprocessor implementing a similar instruction scanning unit.

Numerous variations and modifications will become apparent to those skilled in the art once the above disclosure is fully appreciated. It is intended that the following claims be interpreted to embrace all such variations and modifications.

## Claims

1. An instruction scanning unit for scanning a block of predecode information associated with a plurality of contiguous instruction bytes wherein said block of predecode information includes start byte information indicative of bytes which start instructions and wherein said block of predecode information further includes end byte information indicative of bytes which end instructions, said instruction scanning unit comprising:
an input bus (302, 304) configured to convey said block of precoded information; the instruction scanning unit **characterised by**:
a first subunit (314) coupled to said input bus wherein said first subunit is configured to receive said end byte information, and wherein said first subunit is configured to generate a plurality of instruction valid values, and wherein each of said plurality of instruction valid values is indicative of a potential valid instruction starting at a particular byte within said plurality of contiguous instruction bytes and ending at a byte specified by said end byte information, and wherein said first subunit is configured to convey said plurality of instruction valid values on a plurality of instruction valid buses (324); and
a second subunit (316, 322) coupled to said input bus wherein said second subunit is configured to receive said start byte information, and wherein said second subunit is configured to generate a plurality of instruction start counts responsive to said start byte information, and wherein each of said instruction start counts is indicative of a number of instructions which start between an initial one of said plurality of contiguous instruction bytes and a particular one of said plurality of contiguous instruction bytes, wherein said particular one of said plurality of contiguous instruction bytes comprises a different one of said plurality of contiguous instruction bytes for each different one of said plurality of instruction start counts, and wherein said second subunit is configured to convey said plurality of instruction start counts on a plurality of instruction start count buses (320), and wherein said first subunit and said second subunit operate in parallel.

2. The instruction scanning unit as recited in claim 1 further comprising a third subunit (326) coupled to said input bus, said plurality of instruction valid buses, and said plurality of instruction start count buses wherein said third subunit is configured to select a plurality of scan bus values from said plurality of instruction valid values, and wherein said third subunit is configured to convey said plurality of scan bus values on a plurality of scan buses (312).

3. The instruction scanning unit as recited in claim 2 wherein said third subunit is configured to select said plurality of scan bus values according to said start byte information and said plurality of instruction start counts.

4. The instruction scanning unit as recited in claim 3 wherein a first of said plurality of instuction valid values is selected as a first of said plurality of scan bus values if said start byte information indicates that said particular byte associated with said first of said plurality of instruction valid values is a byte in which an instruction starts and if a first of said plurality of inshuction start counts indicates that zero instructions start prior to said particular byte; and wherein a second of said plurality of instruction valid values is selected as a second of said plurality of scan bus values if said start byte information indicates that said particular byte associated with said second of said plurality of instruction valid values is a byte in which an instruction starts and if a second of said plurality of instruction start counts indicates that one instruction starts prior to said particular byte; and wherein a third of said plurality of instruction valid values is selected as a third of said plurality of scan bus values if said start byte information indicates that said particular byte associated with said third of said plurality of instruction valid values is a byte in which an instruction starts and if a third of said plurality of instruction start counts indicates that two instructions start prior to said particular byte; and wherein a fourth of said plurality of instruction valid values is selected as a fourth of said plurality of scan bus values if said start byte infomation indicates that said particular byte associated with said fourth of said plurality of instruction valid values is a byte in which an instruction starts and if a fourth of said plurality of instruction start counts indicates that three instructions start prior to said particular byte.

5. The instruction scanning unit as recited in claim 1 wherein said each of said plurality of instruction valid values comprises a mask of binary zeros and binary ones, and wherein said binary ones are contiguous to each other.

6. The instrction scanning unit as recited in claim 5 wherein said binary ones are indicative of bytes which comprise said potential instruction.

7. The instruction scanning unit as recited in claim 1 wherein said second subunit further comprises a pair of subunits, and wherein a first of said pair of subunits (316) is coupled to said input bus, and wherein a second of said pair of subunits (322) is coupled to said first of said pair of subunits and to said plurality of instruction start count buses.

8. The instruction scanning unit as recited in claim 7 wherein said first of said pair of subunits is configured to generate a plurality of intermediate instruction start counts wherein each of said plurality of intermediate instruction start counts is indicative of a number of instructions which start between a second one of said plurality of contiguous instruction bytes and a third one of said plurality of contiguous instruction bytes.

9. The instruction scanning unit as recited in claim 8 wherein said second of said pair of subunits is configured to receive said plurality of intermediate instruction counts and is configured to generate said plurality of instruction start counts.

10. The instruction scanning unit as recited in claim 9 wherein said second of said pair of subunits is configured to generate one of said plurality of instruction start counts by adding one of said plurality of intermediate instruction start counts to another one of said intermediate instruction start counts.

11. The instruction scanning unit as recited in claim 1 further comprising a fourth subunit (328) coupled to said input bus wherein said fourth subunit is configured to provide scalability functionality.

12. The instruction scanning unit as recited in claim 11 wherein said scalability functionality comprises detection of an instruction which starts within said plurality of contiguous instruction bytes but does not end within said plurality of contiguous instruction bytes.

13. The instruction scanning unit as recited in claim 11 wherein said scalability functionality comprises detection of an instruction which ends within said plurality of contiguous instruction bytes but does not start within said plurality of contiguous instruction bytes.

14. The instruction scanning unit as recited in claim 11 wherein said scalability functionality comprises detecting that said first one of said plurality of contiguous instruction bytes is not a start byte.

15. The instruction scanning unit as recited in claim 11 wherein said fourth subunit is further configured to provide error checking functionality.

16. The instruction scanning unit as recited in claim 15 wherein said error checking functionality comprises detection of a second start byte subsequent to a first start byte but prior to an end byte.

17. The instruction scanning unit as recited in claim 15 wherein said error checking functionality comprises detection of an end byte and a byte subsequent to said end byte is not a start byte.

18. A method of identifying valid instructions within a plurality of instruction bytes having an associated block of predecoded information, the block including start byte information indicative of bytes which start instructions and end byte information indicative of bytes which end instructions, the method comprising:
creating, responsive to the said end byte information, a plurality of instruction valid values, wherein each one of said plurality of instruction valid values is associated with a respective one of said instruction bytes, and wherein said each one of said plurality of instruction valid values is indicative of an instruction beginning at said respective one of said instruction bytes and ending at a subsequent one of said instruction bytes, and wherein said subsequent one of said instruction bytes is identified by said end byte information as an end byte;
generating, responsive to the said start byte information, a plurality of instruction start counts, wherein each of said plurality of instruction start counts is indicative of a number of instructions beginning prior to a respective one of said plurality of instruction bytes; and
selecting, responsive to said plurality of instruction start counts and said start byte information, one of said plurality of instruction valid values, said one of said plurality of instruction valid values corresponding to one of said plurality of instruction bytes for which a respective one of said plurality of instruction start counts equals a predetermined value and which is indicated by said start byte information to be a start byte.

19. The method as recited in claim 18 wherein said end byte information comprises a plurality of end bits, and wherein a respective one of said plurality of end bits is associated with said respective one of said plurality of instruction bytes, and wherein said respective one of said plurality of end bits being set is indicative of said respective one of said plurality of instruction bytes being an end byte.

20. The method as recited in claim 18 wherein said start byte information comprises a plurality of start bits, and wherein a respective one of said plurality of start bits is associated with said respective one of said plurality of instruction bytes, and wherein said respective one of said plurality of start bits being set is indicative of said respective one of said plurality of instruction bytes being a start byte.

21. The method as recited in claim 18 wherein said creating and said generating are performed in parallel.

22. The method as recited in claim 18 wherein said predetermined value equals one of the group consisting of: zero, one, two, or three.

23. The method as recited in claim 18 further comprising conveying said one of said plurality of instruction valid values to an instruction alignment unit configured to select instruction bytes according to an instruction valid value.

24. The method as recited in claim 18 further comprising checking for errors within start byte information and end byte information associated with said plurality of instruction bytes.

25. The method as recited in claim 24 wherein said checking comprises detecting the beginning of a second instruction subsequent to detecting the beginning of a first instruction but prior to detecting the end of said first instruction.

26. The method as recited in claim 24 wherein said checking comprises detecting the end of an instruction and detecting the lack of a beginning of a subsequent instruction.

27. The method as recited in claim 18 further comprising generating scalability functionality such that said plurality of instruction bytes may be identified in parallel with a second plurality of instruction bytes.

28. The method as recited in claim 27 wherein said scalability functionality comprises detection of an instruction beginning within said plurality of instruction bytes but not ending within said plurality of instruction bytes.

29. The method as recited in claim 27 wherein said scalability functionality comprises detection of an instruction ending within said plurality of instruction bytes but not beginning within said plurality of instruction bytes.

## Patentansprüche

1. Befehlsabfrageeinheit zum Abfragen eines Blocks von vordecodierten Informationen, die mit mehreren zusammenhängenden Befehlsbytes verbunden sind, wobei der Block von vordecodierten Informationen Startbyteinformationen enthält, die Bytes angeben, welche Befehle starten, und wobei der Block von vordecodierten Informationen ferner Endbyteinformationen enthält, die Bytes angeben, welche Befehle beenden, wobei die Befehlsabfrageeinheit aufweist:
- einen Eingangsbus (302, 304), der zum Übertragen des Blocks vordecodierter Informationen ausgebildet ist, wobei die Befehlsabfrageeinheit gekennzeichnet ist durch:
- eine erste Untereinheit (314), die mit dem Eingangsbus gekoppelt ist, wobei die erste Untereinheit zum Empfangen der Endbyteinformationen ausgebildet ist, und wobei die erste Untereinheit zum Erzeugen mehrerer Gültig-Befehlswerte ausgebildet ist, und wobei jeder der mehreren Gültig-Befehlswerte einen potentiellen gültigen Befehl angibt, der an einem bestimmten Byte innerhalb der mehreren zusammenhängenden Befehlsbytes beginnt und an einem Byte endet, das durch die Endbyteinformationen spezifiziert ist, und wobei die erste Untereinheit zum Übertragen der mehreren Gültig-Befehlswerte auf mehreren Gültig-Befehisbussen (324) ausgebildet ist; und
- eine zweite Untereinheit (316, 322), die mit dem Eingangsbus gekoppelt ist, wobei die zweite Untereinheit zum Empfangen der Startbyteinformationen ausgebildet ist, und wobei die zweite Untereinheit zum Erzeugen mehrerer Befehlsstart-Zählungen in Reaktion auf die Startbyteinformationen ausgebildet ist, und wobei jede der mehreren Befehlsstart-Zählungen eine Anzahl von Befehlen angibt, die zwischen einem ursprünglichen der mehreren zusammenhängenden Befehlsbytes und einem bestimmten der mehreren zusammenhängenden Befehlsbytes beginnen, wobei das bestimmte der mehreren zusammenhängenden Befehlsbytes ein anderes der mehreren zusammenhängenden Befehlsbytes für jede verschiedene der mehreren Befehlsstart-Zählungen aufweist, und wobei die zweite Untereinheit zum Übertragen der mehreren Befehlsstart-Zählungen auf mehreren Befehlsstart-Zählungsbussen (320) ausgebildet ist, und wobei die erste Untereinheit und die zweite Untereinheit parallel arbeiten.

2. Befehlsabfrageeinheit nach Anspruch 1, ferner mit einer dritten Untereinheit (326), die mit dem Eingangsbus, den mehreren Gültig-Befehlsbussen und den mehreren Befehlsstart-Zählungsbussen gekoppelt ist, wobei die dritte Untereinheit zum Auswählen einer Vielzahl von Abfragebuswerten aus den mehreren Gültig-Befehlswerten ausgebildet ist, und wobei die dritte Untereinheit zum Übertragen der mehreren Abfragebuswerte auf mehreren Abfragebussen (312) ausgebildet ist.

3. Befehlsabfrageeinheit nach Anspruch 2, bei der die dritte Untereinheit zum Wählen der mehreren Abfragebuswerte entsprechend den Startbyteinformationen und den mehreren Befehlsstart-Zählungen ausgebildet ist.

4. Befehlsabfrageeinheit nach Anspruch 3, bei der ein erste der mehreren Gültig-Befehlswerte als erster der mehreren Abfragebuswerte gewählt wird, wenn die Startbyteinformationen angeben, daß das dem ersten der mehreren Gültig-Befehlswerte zugeordnete bestimmte Byte ein Byte ist, in dem ein Befehl beginnt, und wenn eine erste der mehreren Befehlsstart-Zählungen angibt, daß null Befehle vor dem bestimmten Byte beginnen, und wobei ein zweiter der mehreren Gültig-Befehlswerte als ein zweiter der mehreren Abfragebuswerte gewählt wird, wenn die Startbyteinformationen angeben, daß das dem zweiten der mehreren Gültig-Befehiswerte zugeordnete bestimmte Byte ein Byte ist, in dem ein Befehl beginnt, und wenn eine zweite der mehreren Befehlsstart-Zählungen angibt, daß ein Befehl vor dem bestimmten Byte beginnt; und wobei ein dritter der mehreren Gültig-Befehlswerte als ein dritter der mehreren Abfragebuswerte gewählt wird, wenn die Startbyteinformationen angeben, daß das dem dritten der mehreren Gültig-Befehlswerte zugeordnete bestimmte Byte ein Byte ist, in dem ein Befehl beginnt, und wenn eine dritte der mehreren Befehlsstart-Zählungen angibt, daß zwei Befehle vor dem bestimmten Byte beginnen; und wobei ein vierter der mehreren Gültig-Befehlswerte als ein vierter der mehreren Abfragebuswerte gewählt wird, wenn die Startbyteinformationen angeben, daß das dem vierten der mehreren Gültig-Befehlswerte zugeordnete bestimmte Byte ein Byte ist, in dem ein Befehl beginnt, und wenn eine vierte der mehreren Befehlsstart-Zählungen angibt, daß drei Befehle vor dem bestimmten Byte beginnen.

5. Befehlsabfrageeinheit nach Anspruch 1, bei der jeder der mehreren Gültig-Befehlswerte eine Maske aus binären Nullen und binären Einsen aufweist und die binären Einsen unmittelbar aufeinanderfolgen.

6. Befehlsabfrageeinheit nach Anspruch 5, bei der die binären Einsen Bytes angeben, die den potentiellen Befehl enthalten.

7. Befehlsabfrageeinheit nach Anspruch 1, bei der die zweite Untereinheit ferner zwei Untereinheiten aufweist, und wobei eine erste der beiden Untereinheiten (316) mit dem Eingangsbus gekoppelt ist, und wobei die zweite der beiden Untereinheiten (322) mit der ersten der beiden Untereinheiten und mit den mehreren Befehlsstart-Zählungsbussen gekoppelt ist.

8. Befehlsabfrageeinheit nach Anspruch 7, bei der die erste der beiden Untereinheiten zum Erzeugen mehrerer Zwischen-Befehlsstart-Zählungen ausgebildet ist, wobei jede der mehreren Zwischen-Befehlsstart-Zählungen eine Anzahl von Befehlen angibt, welche zwischen einem zweiten der mehreren zusammenhängenden Befehlsbytes und einem dritten der mehreren zusammenhängenden Befehlsbytes beginnen.

9. Befehlsabfrageeinheit nach Anspruch 8, bei der die zweite der beiden Untereinheiten zum Empfangen der mehreren Zwischen-Befehlsstart-Zählungen und zum Erzeugen der mehreren Befehlsstart-Zählungen ausgebildet ist.

10. Befehlsabfrageeinheit nach Anspruch 9, bei der die zweite der beiden Untereinheiten zum Erzeugen einer der mehreren Befehlsstart-Zählungen durch Addieren einer der mehreren Zwischen-Befehlsstart-Zählungen zu einer anderen der Zwischen-Befehlsstart-Zählungen ausgebildet ist.

11. Befehlsabfrageeinheit nach Anspruch 1, ferner mit einer vierten Untereinheit (328), die mit dem Eingangsbus gekoppelt ist, wobei die vierte Untereinheit zum Bereitstellen der Skalierbarkeitsfunktion ausgebildet ist.

12. Befehlsabfrageeinheit nach Anspruch 11, bei der die Skalierbarkeitsfunktion das Erkennen eines Befehls umfaßt, der in den mehreren zusammenhängenden Befehlsbytes beginnt, jedoch nicht in den mehreren zusammenhängenden Befehlsbytes endet.

13. Befehlsabfrageeinheit nach Anspruch 11, bei der die Skalierbarkeitsfunktion das Erkennen eines Befehls beinhaltet, der in den mehreren zusammenhängenden Befehlsbytes endet, jedoch nicht in den mehreren zusammenhängenden Befehlsbytes beginnt.

14. Befehlsabfrageeinheit nach Anspruch 11, bei der die Skalierbarkeitsfunktion beinhaltet, zu erkennen, daß das erste derzusammenhängenden Befehlsbytes kein Startbyte ist.

15. Befehlsabfrageeinheit nach Anspruch 11, bei der vierte Untereinheit ferner zum Bereitstellen einer Fehlerprüffunktion ausgebildet ist.

16. Befehlsabfrageeinheit nach Anspruch 15, bei der die Fehlerprüffunktion das Erkennen eines zweiten Startbytes nach einem ersten Startbyte, jedoch vor einem Endbyte beinhaltet.

17. Befehlsabfrageeinheit nach Anspruch 15, bei der die Fehlerprüffunktion beinhaltet, ein Endbyte zu erkennen, und zu erkennen, daß ein auf ein Endbyte folgendes Byte kein Startbyte ist.

18. Verfahren zum Identifizieren gültiger Befehle unter mehreren Befehlsbytes mit einem zugehörigen Block von vordecodierten Informationen, wobei der Block Startbyteinformationen, die Bytes angeben, welche Befehle starten, und Endbyteinformationen enthält, die Bytes angeben, die Befehle beenden, wobei das Verfahren umfaßt:
- Erstellen, in Reaktion auf die Endbyteinformationen, mehrerer Gültig-Befehlswert, wobei jeder der mehreren Gültig-Befehlswerte einem jeweiligen der Befehlsbytes zugeordnet ist, und wobei jeder der mehreren Gültig-Befehlswerte einen Befehl angibt, der an dem jeweiligen einen der Befehlsbytes beginnt und an einem nachfolgenden der Befehlsbytes endet, und wobei das nachfolgende Befehlsbyte durch die Endbyteinformationen als Endbyte identifiziert wird;
- Erzeugen, in Reaktion auf die Bytestartinformationen, mehrerer Befehlsstart-Zählungen, wobei jede Befehlsstart-Zählung eine Anzahl von Befehlen angibt, die vor einem jeweiligen der mehreren Befehlsbytes beginnen; und
- Wählen, in Reaktion auf die mehreren Befehlsstart-Zählungen und die Startbyteinformationen, eines der mehreren Gültig-Befehlswerte, wobei der eine der mehreren Gültig-Befehlswerte einem der mehreren Befehlsbytes entspricht, für die eine jeweilige der mehreren Befehlsstart-Zählungen gleich einem vorbestimmten Wert ist und das von den Startbyteinformationen als ein Startbyte angegeben ist.

19. Verfahren nach Anspruch 18, bei dem die Endbyteinformationen mehrere Endbits aufweisen, und bei dem ein jeweiliges der mehreren Endbits dem jeweiligen der mehreren Befehlsbytes zugeordnet wird, und bei dem das gesetzte jeweilige der mehreren Endbits das jeweilige der mehreren Befehlsbytes als ein Endbyte angibt.

20. Verfahren nach Anspruch 18, bei dem die Startbyteinformationen mehrere Startbits umfassen und bei dem ein jeweiliges der mehreren Startbits dem jeweiligen der mehreren Befehlsbytes zugeordnet ist, und wobei das gesetzte jeweilige der mehreren Startbits das jeweilige der mehreren Befehlsbytes als Startbyte angibt.

21. Verfahren nach Anspruch 18, bei dem das Erstellen und das Erzeugen parallel durchgeführt werden.

22. Verfahren nach Anspruch 18, bei dem der vorbestimmte Wert gleich null, eins, zwei oder drei ist.

23. Verfahren nach Anspruch 18, ferner mit dem Übertragen des einen der mehreren Gültig-Befehlswerte an eine Befehlsabgleichseinheit, die zum Wählen von Befehlsbytes entsprechend einem Gültig-Befehlswert ausgebildet ist.

24. Verfahren nach Anspruch 18, ferner mit dem Prüfen auf Fehler innerhalb der Startbyteinformationen und der Endbyteinformationen, die den mehreren Befehlsbytes zugeordnet sind.

25. Verfahren nach Anspruch 24, bei dem der Prüfvorgang das Erkennen des Beginns eines zweiten Befehls im Anschluß an das Erkennen des Beginns eines ersten Befehls, jedoch vor dem Erkennen des Endes des ersten Befehls umfaßt.

26. Verfahren nach Anspruch 24, bei dem das Prüfen das Erkennendes Endes eines Befehls und das Erkennen des Fehlens des Beginns eines nachfolgenden Befehls umfaßt.

27. Verfahren nach Anspruch 18, ferner mit dem Erzeugen einer Skalierbarkeitsfunktion derart, daß die mehreren Befehlsbytes parallel zu einer zweiten Vielzahl von Befehlsbytes identifiziert werden können.

28. Verfahren nach Anspruch 27, bei dem die Skalierbarkeitsfunktion das Erkennen eines Befehls umfaßt, der innerhalb der mehreren Befehlsbytes beginnt, jedoch nicht innerhalb der mehreren Befehlsbytes endet.

29. Verfahren nach Anspruch 27, bei dem die Skalierbarkeitsfunktion das Erkennen eines Befehls umfaßt, der innerhalb der mehreren Befehlsbytes endet, jedoch nicht innerhalb der mehreren Befehlsbytes beginnt.

## Revendications

1. Unité d'analyse d'instructions pour analyser un bloc d'informations de prédécodage associé à une pluralité de multiplets contigus d'instructions, dans laquelle ledit bloc d'informations de prédécodage comprend des informations de multiplets de début, indicatives des multiplets qui commencent des instructions et dans laquelle ledit bloc d'informations de prédécodage comprend en outre des informations de multiplets de fin, indicatives des multiplets qui finissent des instructions, ladite unité d'analyse d'instructions comprenant
- un bus d'entrée (302, 304) configuré pour convoyer ledit bloc d'informations pré-décodées ; l'unité d'analyse d'instructions **étant caractérisée en ce que** :
- une première sous-unité (314) est couplée audit bus d'entrée, ladite première sous-unité étant configurée pour recevoir lesdites informations de multiplets de fin et ladite première sous-unité étant confgurée pour générer une pluralité de valeurs d'instructions valides, chaque valeur de ladite pluralité de valeurs d'instructions valides étant indicative d'une instruction valide potentielle commençant à un multiplet particulier de ladite pluralité de multiplets contigus d'instructions et finissant à un multiplet spécifié par lesdites informations de multiplets de fin, ladite première sous-unité étant configurée pour convoyer ladite pluralité de valeurs d'instructions valides sur une pluralité de bus d'instructions valides (324); et
- une deuxième sous-unité (316, 322) est couplée audit bus d'entrée, ladite deuxième sous-unité étant configurée pour recevoir lesdites informations de multiplets de débuts et ladite deuxième sous-unité étant configurée pour générer une pluralité de comptes de débuts d'instructions en réponse auxdites informations de multiplets de débuts, chacun desdits comptes de débuts d'instructions étant indicatif du nombre d'instructions qui commencent entre un multiplet initial de ladite pluralité de multiplets contigus d'instructions et un multiplet particulier de ladite pluralité de multiplets contigus d'instructions, ledit multiplet particulier de ladite pluralité de multiplets contigus d'instructions représentant un multiplet différent de ladite pluralité de multiplets contigus d'instructions pour chaque compte différent de ladite pluralité de comptes de débuts d'instructions, ladite deuxième sous-unité étant configurée pour convoyer ladite pluralité de comptes de débuts d'instructions sur une pluralité de bus de comptes de débuts d'instructions (320) et ladite première sous-unité et ladite deuxième sous-unité fonctionnant en parallèle.

2. Unité d'analyse d'instructions selon la revendication 1, comprenant en outre une troisième sous-unité (326) couplée audit bus d'entrée, à ladite pluralité de bus d'instructions valides et à ladite pluralité de bus de comptes de débuts d'instructions, ladite troisième sous-unité étant configurée pour sélectionner une pluralité de valeurs de bus d'analyse à partir de ladite pluralité de valeurs d'instructions valides et ladite troisième sous-unité étant configurée pour convoyer ladite pluralité de valeurs de bus d'analyse sur une pluralité de bus d'analyse (312).

3. Unité d'analyse d'instructions selon la revendication 2, dans laquelle ladite troisième sous-unité est configurée pour sélectionner ladite pluralité de valeurs de bus d'analyse suivant lesdites informations de multiplets de débuts et ladite pluralité de comptes de débuts d'instructions.

4. Unité d'analyse d'instructions selon la revendication 3, dans laquelle une première valeur de ladite pluralité de valeurs d'instructions valides est sélectionnée comme première valeur de ladite pluralité de valeurs de bus d'analyse si lesdites informations de multiplets de début indiquent que ledit multiplet particulier associé à ladite première valeur de ladite pluralité de valeurs d'instructions valides est un multiplet par lequel commence une instruction et si un premier compte de ladite pluralité de comptes de débuts d'instructions indique que zéro instructions commencent avant ledit multiplet particulier; dans laquelle une deuxième valeur de ladite pluralité de valeurs d'instructions valides est sélectionnée comme deuxième valeur de ladite pluralité de valeurs de bus d'analyse si lesdites informations de multiplets de débuts indiquent que ledit multiplet particulier associé à ladite deuxième valeur de ladite pluralité de valeurs d'instructions valides est un multiplet par lequel commence une instruction et si un deuxième compte de ladite pluralité de comptes de débuts d'instructions indique qu'une instruction commence avant ledit multiplet particulier ; dans laquelle une troisième valeur de ladite pluralité de valeurs d'instructions valides est sélectionnée comme troisième valeur de ladite pluralité de valeurs de bus d'analyse si lesdites informations de multiplets de débuts indiquent que ledit multiplet particulier associé à ladite troisième valeur de ladite pluralité de valeurs d'instructions valides est un multiplet par lequel commence une instruction et si un troisième compte de ladite pluralité de comptes de débuts d'instructions indique que deux instructions commencent avant ledit multiplet particulier; et dans laquelle une quatrième valeur de ladite pluralité de valeurs d'instructions valides est sélectionnée comme quatrième valeur de ladite pluralité de valeurs de bus d'analyse si lesdites informations de multiplets de débuts indiquent que ledit multiplet particulier associé à ladite quatrième valeur de ladite pluralité de valeurs d'instructions valides est un multiplet par lequel commence une instruction et si un quatrième compte de ladite pluralité de comptes de débuts d'instructions indique que trois instructions commencent avant ledit multiplet particulier.

5. Unité d'analyse d'instructions selon la revendication 1, dans laquelle chaque valeur de ladite pluralité de valeurs d'instructions valides comprend un masque de zéros binaires et de uns binaires et dans laquelle lesdits uns binaires sont contigus les uns aux autres.

6. Unité d'analyse d'instructions selon la revendication 5, dans laquelle lesdits uns binaires sont indicatifs des multiplets qui constituent ladite instruction potentielle.

7. Unité d'analyse d'instructions selon la revendication 1, dans laquelle ladite deuxième sous-unité comprend en outre une paire de sous-unités, dans laquelle une première sous-unité (316) de ladite paire de sous-unités est couplée audit bus d'entrée et dans laquelle une deuxième sous-unité (322) de ladite paire de sous-unités est couplée à ladite première sous-unité de ladite paire de sous-unités et à ladite pluralité de bus de comptes de débuts d'instructions.

8. Unité d'analyse d'instructions selon la revendication 7, dans laquelle ladite première sous-unité de ladite paire de sous-unités est configurée pour générer une pluralité de comptes intermédiaires de débuts d'instructions, chaque compte de ladite pluralité de comptes intermédiaires de débuts d'instructions étant indicatif du nombre d'instructions qui commencent entre un deuxième multiplet de ladite pluralité de multiplets contigus d'instructions et un troisième multiplet de ladite pluralité de multiplets contigus d'instructions.

9. Unité d'analyse d'instructions selon la revendication 8, dans laquelle ladite deuxième sous-unité de ladite paire de sous-unités est configurée pour recevoir ladite pluralité de comptes intermédiaires d'instructions et est configurée pour générer ladite pluralité de comptes de débuts d'instructions.

10. Unité d'analyse d'instructions selon la revendication 9, dans laquelle ladite deuxième sous-unité de ladite paire de sous-unités est configurée pour générer un compte de ladite pluralité de comptes de débuts d'instructions en ajoutant un compte de ladite pluralité de comptes intermédiaires de débuts d'instructions à un autre desdits comptes intermédiaires de débuts d'instructions.

11. Unité d'analyse d'instructions selon la revendication 1, comprenant en outre une quatrième sous-unité (328) couplée audit bus d'entrée, ladite quatrième sous-unité étant configurée pour procurer une fonctionnalité de dimensionnement.

12. Unité d'analyse d'instructions selon la revendication 11, dans laquelle ladite fonctionnalité de dimensionnement comprend la détection d'une instruction qui commence dans ladite pluralité de multiplets contigus d'instructions mais qui ne finit pas dans ladite pluralité de multiplets contigus d'instructions.

13. Unité d'analyse d'instructions selon la revendication 11, dans laquelle ladite fonctionnalité de dimensionnement comprend la détection d'une instruction qui finit dans ladite pluralité de multiplets contigus d'instructions mais ne commence pas dans ladite pluralité de multiplets contigus d'instructions.

14. Unité d'analyse d'instructions selon la revendication 11, dans laquelle ladite fonctionnalité de dimensionnement comprend la détection du fait que ledit premier multiplet de ladite pluralité de multiplets contigus d'instructions n'est pas un multiplet de début d'instruction.

15. Unité d'analyse d'instructions selon la revendication 11, dans laquelle ladite quatrième sous-unité est en outre configurée pour procurer une fonctionnalité de détection d'erreur.

16. Unité d'analyse d'instructions selon la revendication 15, dans laquelle ladite fonctionnalité de détection d'erreur comprend la détection d'un deuxième multiplet de début suivant un premier multiplet de début mais précédant un multiplet de fin.

17. Unité d'analyse d'instructions selon la revendication 15, dans laquelle ladite fonctionnalité de détection d'erreur comprend la détection d'un multiplet de fin qui est suivi d'un multiplet qui n'est pas un multiplet de début.

18. Procédé d'identification d'instructions valides dans une pluralité de multiplets d'instructions ayant un bloc associé d'informations pré-décodées, le bloc comprenant des informations de multiplets de débuts indicatives des multiplets qui commencent des instructions et des informations de multiplets de fins indicatives des multiplets qui finissent des instructions, le procédé consistant à :
- créer, en réponse auxdites informations de multiplets de fins, une pluralité de valeurs d'instructions valides, chaque valeur de ladite pluralité de valeurs d'instructions valides étant associée à un multiplet respectif desdits multiplets d'instructions, chaque valeur de ladite pluralité de valeurs d'instructions valides étant indicative d'une instruction commençant audit multiplet respectif desdits multiplets d'instructions et finissant à un multiplet suivant desdits multiplets d'instructions et ledit multiplet suivant desdits multiplets d'instructions étant identifié par lesdites informations de multiplets de fins en tant que multiplet de fin ;
- générer, en réponse auxdites informations de multiplets de débuts, une pluralité de comptes de débuts d'instructions, chaque compte de ladite pluralité de comptes de débuts d'instructions étant indicatif du nombre d'instructions commençant avant un multiplet respectif de ladite pluralité de multiplets d'instructions ; et
- sélectionner, en réponse à ladite pluralité de comptes de débuts d'instructions et auxdites informations de multiplets de début, une valeur de ladite pluralité de valeurs d'instructions valides, ladite valeur de ladite pluralité de valeurs d'instructions valides correspondant à un multiplet de ladite pluralité de multiplets d'instructions pour lequel un compte respectif de ladite pluralité de comptes de débuts d'instructions est égal à une valeur prédéterminée et qui est indiquée par lesdites informations de multiplets de débuts comme étant un multiplet de début.

19. Procédé selon la revendication 18, dans lequel lesdites informations de multiplets de fins comprennent une pluralité de bits de fins, dans lequel un bit respectif de ladite pluralité de bits de fins est associé audit multiplet respectif de ladite pluralité de multiplets d'instructions et dans lequel ledit bit respectif de ladite pluralité de bits de fins indique, en étant à un, que ledit multiplet respectif de ladite pluralité de multiplets d'instructions est un multiplet de fin.

20. Procédé selon la revendication 18, dans lequel lesdites informations de multiplets de débuts comprennent une pluralité de bits de débuts, dans lequel un bit respectif de ladite pluralité de bits de débuts est associé audit multiplet respectif de ladite pluralité de multiplets d'instructions et dans lequel ledit bit respectif de ladite pluralité de bits de débuts indique, en étant à un, que ledit multiplet respectif de ladite pluralité de multiplets d'instructions est un multiplet de début.

21. Procédé selon la revendication 18, dans lequel ladite création et ladite génération sont effectuées en parallèle.

22. Procédé selon la revendication 18, dans lequel ladite valeur prédéterminée est égale à une valeur du groupe constitué par : zéro, un, deux ou trois.

23. Procédé selon la revendication 18, consistant en outre à convoyer ladite valeur de ladite pluralité de valeurs d'instructions valides à une unité d'alignement d'instructions configurée pour sélectionner des multiplets d'instructions suivant une valeur d'instruction valide.

24. Procédé selon la revendication 18, consistant en outre à détecter des erreurs dans les informations de multiplets de débuts et les informations de multiplets de fins associées à ladite pluralité de multiplets d'instructions.

25. Procédé selon la revendication 24, dans lequel ladite détection consiste à détecter le début d'une deuxième instruction après avoir détecté le début d'une première instruction mais avant de détecter la fin de ladite première instruction.

26. Procédé selon la revendication 24, dans lequel ladite détection consiste à détecter la fin d'une instruction et à détecter l'absence de début d'une instruction suivante.

27. Procédé selon la revendication 18, consistant en outre à générer une fonctionnalité de dimensionnement de façon à ce que ladite pluralité de multiplets d'instructions puisse être identifiée en parallèle avec une deuxième pluralité de multiplets d'instructions.

28. Procédé selon la revendication 27, dans lequel ladite fonctionnalité de dimensionnement comprend la détection d'une instruction commençant dans ladite pluralité de multiplets d'instructions mais ne finissant pas dans ladite pluralité de multiplets d'instructions.

29. Procédé selon la revendication 27, dans lequel ladite fonctionnalité de dimensionnement comprend la détection d'une instruction finissant dans ladite pluralité de multiplets d'instructions mais ne commençant pas dans ladite pluralité de multiplets d'instructions.
